# EUROPÄISCHE PATENTSCHRIFT

(11) **EP 3 376 909 B1**
(45) Veröffentlichungstag und Bekanntmachung des Hinweises auf die Patenterteilung: **09.10.2019**
(21) Anmeldenummer: 16829060.9
(22) Anmeldetag: 18.11.2016
(51) Int. Cl.: A47F 10/02, G06Q 10/08

(54) **VORRICHTUNG ZUR LAGERUNG VON STÜCKGUT SOWIE ZUGEHÖRIGES VERFAHREN**
DEVICE FOR STORING PIECE GOODS AND ASSOCIATED METHOD
DISPOSITIF DE STOCKAGE D'UN PRODUIT EN VRAC ET PROCÉDÉ ASSOCIÉ

(30) Priorität: 18.11.2015 DE 102015120000
(43) Veröffentlichungstag der Anmeldung: 26.09.2018
(73) Patentinhaber: Adolf Würth GmbH & Co. KG, 74653 Künzelsau (DE); Würth International AG, 7000 Chur (CH)
(72) Erfinder: WITTIG, Klaus, 74613 Öhringen (DE)
(74) Vertreter: Dilg, Haeusler, Schindelmann Patentanwaltsgesellschaft mbH
(86) Internationale Anmeldenummer: PCT/DE2016/000404
(87) Internationale Veröffentlichungsnummer: WO 2017/084649

(56) Entgegenhaltungen:
- WO-A1-2015/100324
- WO-A2-2014/124612
- US-A1- 2007 016 494

## Beschreibung

Die Erfindung betrifft eine Vorrichtung zur Lagerung von Stückgut sowie ein Verfahren zum Betreiben der Vorrichtung.

Um den Anforderungen einer zeitgemäßen und damit anspruchsvollen Logistik gerecht zu werden, ist es heutzutage notwendig, die dafür verwendeten Lagervorrichtungen intelligent auszustatten und in übergeordnete Gesamtsysteme einzubinden.

Generell sind bereits einige Ansätze für automatisierte Lagersysteme mit automatischen Erfassungsvorrichtungen bekannt.

US 20070016494 A offenbart eine gattungsgemäße Vorrichtung zur Lagerung von Stückgut.

Die DE 10 2007 017 207 A1 beschreibt einen Sensor für eine Belegerkennung und offenbart dabei eine Schublade mit einem Schaumstoffnormteil und Ausnehmungen zur Aufnahme von Werkzeugen. Am Grund einer Ausnehmung befindet sich ein als Reflexlichtschranke ausgebildeter Sensor und umfasst dabei einen Lichtsender und einen in unmittelbarer Nähe angeordneten Empfänger. Je nachdem, ob sich ein Werkzeug in der Ausnehmung befindet oder nicht, wird das emittierte Licht reflektiert oder nicht, so dass der Empfänger nur dann ein Signal erzeugt, wenn ein Werkzeug in der Ausnehmung vorhanden ist.

Die DE 197 14 799 C2 zeigt eine Vorrichtung zum Lagern von Wareneinheiten mit einer am Boden einer Warenablage angeordneten Matrix aus Sensoren und entsprechenden Signalleitungen, wobei die Signalleitungen im Bereich der Warenablage von einem Leiterplattenstreifen gebildet werden, auf dem auch die Sensoren montiert sind, wobei die Sensoren Drucksensoren, kapazitive / induktive Sensoren oder mechanische Schalter sind.

Aus der US 5,328,169 ist ein Fotokopiergerät bekannt, der erstellte Kopien in verschiedene Fächer, die übereinander schräg angeordnet sind, einordnet. Am unteren Ende jedes Fachs sind sowohl eine Leuchtdiode als ein Lichtsensor voneinander beabstandet angeordnet, wobei die unter dem jeweiligen Fach angeordnete Leuchtdiode durch ein Loch in dem jeweiligen Fach in den Lichtsensor des darüber angeordneten Fachs strahlt. Eine zugeordnete Elektronik erkennt aus dem Vorliegen eines Signals an der Leuchtdiode, ob Papier zwischen der Leuchtdiode und dem Lichtsensor angeordnet ist: Liegt ein Signal vor, befindet sich kein Papier in dem Fach. Liegt kein Signal vor, ist der Lichtstrahl unterbrochen und es liegt Papier im Fach. Dadurch, dass die Leuchtdiode und der Lichtsensor in Höhenrichtung des Fachs getrennt angeordnet sind, ergibt sich eine relativ große Baugröße. Mit der beschriebenen Anordnung kann nur festgestellt werden, ob Papier am unteren Ende des jeweiligen Fachs aufliegt.

Darüber hinaus sind weitere Lösungen bekannt, welche mit Kräftesensoren, wie z.B. Wägzellen oder Dehnungsmessstreifen, das Gewicht von Stückgut ermitteln und so eine Belegung an einem bestimmten Platz detektieren. Es sind optische Systeme bekannt, bei denen Kameras Bilder aufnehmen und die Bilderdaten hinsichtlich einer Belegerkennung ausgewertet werden.

Nachteile dieser Lösungen sind allgemein die Verwendung einseitig wirkender Sensoren und damit die Notwendigkeit ein Lagergut in unmittelbaren Nähe zum Sensor zu platzieren sowie teilweise komplexe Systeme, die eine Herstellung teuer machen oder für eine Nachrüstung bestehender System in der Regel nicht geeignet ist.

Aufgabe der Erfindung ist es, eine Vorrichtung zur Lagerung von Stückgut sowie ein Verfahren zum Betreiben derselben anzugeben, die auf einfache Weise die Anzahl und Art von Stückgut erfassen und auf Basis davon Nachbestellungen des Stückguts auslösen können.

Diese Aufgabe wird erfindungsgemäß durch eine Vorrichtung gemäß Anspruch 1 und ein Verfahren gemäß Anspruch 11 gelöst.

Das Stückgut umfasst vorteilhaft Kartonagen, Aerosoldosen, Koffer, Lagerboxen und Werkzeugkisten.

Bevorzugt verlaufen die Böden schräg, d.h. unter einem Winkel zu einer Horizontalen.

Mit Vorteil ist auf der Oberseite des mindestens einen Boden eine für Signale transparente Schutzschicht angeordnet, bspw. eine Folie, um die Öffnungen zu schützen.

In einer ersten Variante sind die Signalgeber und Signalempfänger gemeinsam in einer Öffnung an der Unterseite des mindestens einen Bodens angeordnet.

In einer zweiten Variante sind entweder die Signalgeber oder die Signalempfänger in Öffnungen an der Unterseite des mindestens einen Bodens angeordnet und die andere Sorte (Signalempfänger oder Signalgeber) ist oberhalb der Öffnungen angeordnet, wobei bevorzugt jedem Signalgeber genau ein Signalempfänger zugeordnet ist, bspw. können diese auf derselben Achse angeordnet sein.

Bevorzugt sind Signalgeber und/oder die Signalempfänger von Öffnungen eines Abschnitts des mindestens einen Bodens zu einer Sensorbaugruppe zusammengefasst, um diesen Abschnitt mit dieser einen Sensorbaugruppe zu überwachen.

In diesem Fall bildet vorteilhaft eine Reihe von linear hintereinander angeordneten Öffnungen den Abschnitt.

In einer derartigen Anordnung kann bei schräg verlaufenden Böden die Reihe von Öffnungen von einem tiefsten Punkt des Bodens zu einem höchsten Punkt des Bodens, insbesondere linear und auf kürzestem Weg verlaufen und die Signalgeber und/oder Signalempfänger der Öffnungen zu einer Sensorbaugruppe zusammengefasst sein, insbesondere um der Sensorgruppe im Steuersystem ein bestimmtes Stückgut zuzuordnen, bspw. eine bestimmte Kartonage oder Aerosoldose.

Mit Vorteil ist in diesem Fall in dem Steuersystem eine Standfläche des jeweiligen Stückguts auf dem Boden hinterlegt, so dass das Steuersystem anhand der Signale der Signalempfänger der Sensorbaugruppe und der Standfläche des einzelnen Stückguts die Anzahl von gleichen Stücken des Stückguts auf dem Boden entlang der Sensorbaugruppe berechnen kann.

Das Hinterlegen einer Standfläche des jeweiligen Stückguts auf dem Boden in dem Steuersystem ist vorteilhaft, da das Steuersystem anhand der Signale der Signalempfänger der Sensorbaugruppe und der Standfläche des einzelnen Stückguts die Anzahl von gleichen Stücken des Stückguts auf dem Boden entlang der Sensorbaugruppe berechnen kann.

Das Ausgeben eines Bestellsignals durch das Steuersystem an eine Person und/oder ein Bestellsystem erfolgt bevorzugt, wenn die Anzahl von gleichen Stücken eines Stückguts in einem Abschnitt einen vorbestimmten Schwellwert aufweist.

Das Ausgeben des Bestellsignals umfasst mit Vorteil das Versenden einer Mail, einer SMS oder einer MMS.

Dieses Ausgeben umfasst bevorzugt ein Übermitteln von Informationen zur Kennzeichnung des Stückguts, bspw. eine Artikelnummer, Informationen zu der benötigten Anzahl von Stücken des Stückguts sowie eine Information zur Identifikation des Bodens bzw. zur Vorrichtung zur Lagerung von Stückgut zur Adressierung einer Nachlieferung des Stückguts.

Ein schräges Anordnen des mindestens einen Bodens ist vorteilhaft, da Stücke gleichen Stückguts in dem jeweiligen Abschnitt durch die Gravitation an das untere Ende des Bodens rutschen und so zur vereinfachten Entnahme zur Verfügung stehen.

Das Anordnen von Trennelementen zwischen benachbarten Abschnitten eines Bodens ist vorteilhaft, um Stückgut auf dem Boden voneinander zu trennen.

Weitere Merkmale, Einzelheiten und Vorzüge der Erfindung ergeben sich aus den Schutzansprüchen, deren Wortlaut durch Bezugnahme zum Inhalt der Beschreibung gemacht wird. Ausführungen und Beispiele der Erfindung sind in den Zeichnungen dargestellt und werden in der nachfolgenden Beschreibung näher erläutert.

Hierbei zeigen:
- Fig. 1:: eine perspektivische Ansicht einer Sensorbaugruppe,
- Fig. 2 a-d:: verschiedene Ansichten einer Sensorbaugruppe,
- Fig. 3 a-c:: perspektivische Ansichten möglicher Querschnitte einer Sensorbaugruppe
- Fig. 4 a-e:: Draufsichten auf mögliche Formen einer Sensorbaugruppe,
- Fig. 5:: eine perspektivische Ansicht einer Sensorbaugruppe,
- Fig. 6:: eine perspektivische Ansicht einer Sensorbaugruppe,
- Fig. 7:: Vorderansicht einer Sensorbaugruppe,
- Fig. 8:: Vorderansicht einer Sensorbaugruppe,
- Fig. 9:: Vorderansicht einer Sensorbaugruppe mit einem Teilschnitt,
- Fig. 10:: Seitenansicht einer Sensorbaugruppe,
- Fig. 11: Diagramm möglicher Signale,
- Fig. 12:: Seitenansicht einer Sensorbaugruppe,
- Fig. 13: Draufsicht auf eine Sensorbaugruppe,
- Fig. 14 a,b:: schematische Darstellung eines Sensorsystems,
- Fig. 15 a,b:: Seitenansicht eines Sensorsystems,
- Fig. 16:: Seitenansicht eines Sensorsystems,
- Fig. 17:: Seitenansicht eines Sensorsystems.
- Fig. 18 a-c:: schematische Darstellungen einer Lagervorrichtung,
- Fig. 19 a-d:: schematische Darstellungen einer Lagervorrichtung mit verschiedenen Belegzuständen
- Fig. 20 a-c:: Seitenansichten zur Anordnung einer Sensorbaugruppe an einer Lagervorrichtung
- Fig 21 a,b:: Seitenansicht von Begrenzungselementen
- Fig. 22 a,b:: Seitenansicht und Schnitt eines Begrenzungselements
- Fig. 23 a,b:: perspektivische Darstellungen von Begrenzungselementen,
- Fig. 24a,b:: perspektivische Darstellungen von Begrenzungselementen,
- Fig. 25:: perspektivische Darstellung eines Begrenzungselements,
- Fig. 26:: perspektivische Darstellung eines Begrenzungselements,
- Fig. 27:: perspektivische Darstellung eines Begrenzungselements,
- Fig. 28 a-c:: perspektivische Darstellung sowie Drauf- und Detailansicht eines Begrenzungselements,
- Fig. 29:: perspektivische Darstellung eines Regalbodens,
- Fig. 30:: perspektivische Darstellung eines Regals
- Fig. 31 a,b:: Regalboden und Schnitt durch mehrere Regalböden,
- Fig. 32:: perspektivische Darstellung eines Schranks,
- Fig. 33:: perspektivische Darstellung einer Schublade,
- Fig. 34 a,b:: perspektivische Darstellung eines Ausschnitts einer Schublade sowie eine Draufsicht einer Schublade,
- Fig. 35:: perspektivische Darstellung eines Regalbodens.

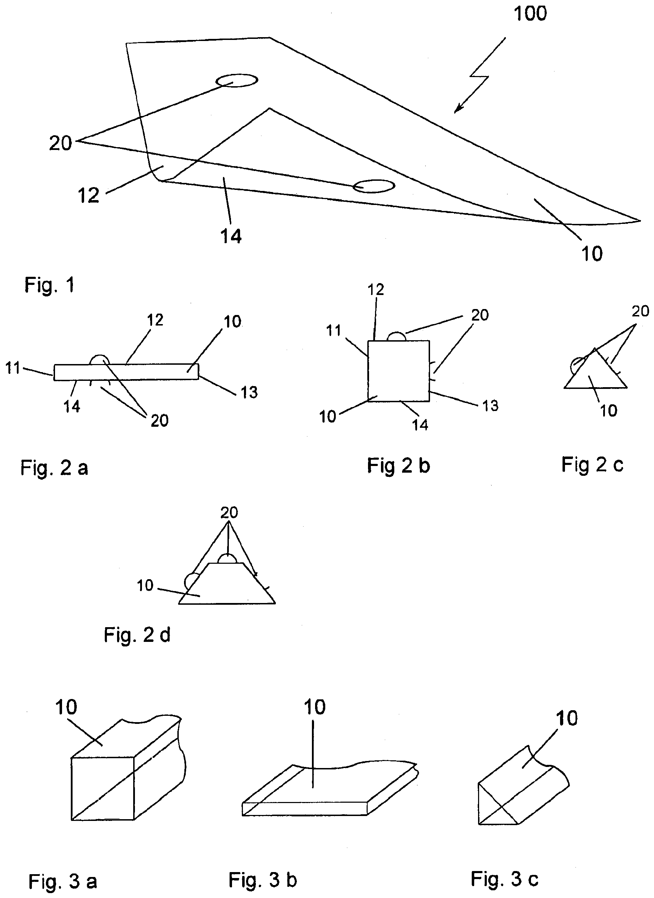

Fig. 1 zeigt eine perspektivische Ansicht einer Sensorbaugruppe 100, die in einer nicht erfindungsgemäßen Ausführung mit einem Träger 10 aus einem flexiblen Material hergestellt ist. Man sieht von schräg oben auf die vordere linke Ecke, die hier hochgebogen dargestellt ist und einen Blick sowohl auf die Oberseite 12 als auch auf die Unterseite 14 ermöglicht. Auf der nicht erfindungsgemäßen Sensorbaugruppe 100 ist sowohl auf der Ober- als auch auf die Unterseite 12, 14 jeweils zumindest ein Sensorelement 20 angeordnet.

Diese Anordnung ermöglicht der Sensorbaugruppe in 2 Richtungen zu funktionieren (Fig. 2 a). Im Prinzip kann jede der Außenflächen der Sensorbaugruppe mit Sensorelementen ausgestattet werden, so dass eine Sensorbaugruppe in alle 3 Raumachsen jeweils in 2 Richtungen funktionieren könnte. In Fig. 2 b ist eine solche Sensorbaugruppe mit den Sensorelementen zumindest an 2 Seitenflächen 12, 13 in einer Draufsicht dargestellt. Auf die Darstellung von Sensorelementen in den restlichen Seitenwänden 11, 14 sowie den Stirnflächen wurde verzichtet. Eine Sensorbaugruppe wie in Fig. 2 b könnte mit weiteren Baugruppen jeweils um 90° verschwenkt einen Raum an seinen Raumgrenzen überwachen. Eine Sensorbaugruppe gem. Fig. 2 c könnte kombiniert mit weiteren Sensorbaugruppen einen Raum jeweils diagonal überwachen, mit einer Bauform wie in Fig. 2 d auch noch in den direkten Raumachsen.

Dabei kann der Querschnitt einer Sensorbaugruppe mehrere mögliche Formen annehmen (Fig. 3 a-c). Zur Aufnahme entsprechender Sensorelemente sind diejenigen Formen am besten geeignet, die bzgl. der Dimensionen oder der Anzahl der verbauten Sensorelemente eine gerade Fläche zur Verfügung stellen, wozu sich ein Querschnitt mit Ecken am besten eignet.

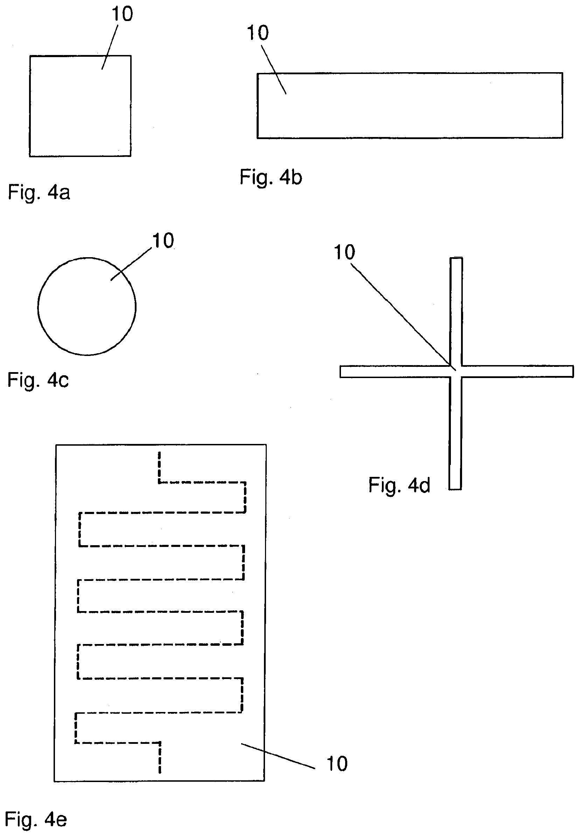

Fig. 4 a-c zeigen die Draufsichten mehrerer möglicher Formen von Sensorbaugruppen zur bestmöglichen Anpassung an den zu überwachenden Raum. Soll die Sensorbaugruppe gegenüber der Bauform des zu überwachenden Raums optimiert werden, so lässt sich die Baugruppe mit einem nicht vollflächigen, aber in einer den Raum dennoch bestmöglich abdeckenden Form herstellen, so z.B. kreuzförmig (Fig. 4 d) oder mäanderförmig (Fig. 4 e), wobei die Sensoren auf der gestrichelten Linie aufgesetzt sein können oder die Form des Trägers ist schmal und folgt der gestrichelten Linie.

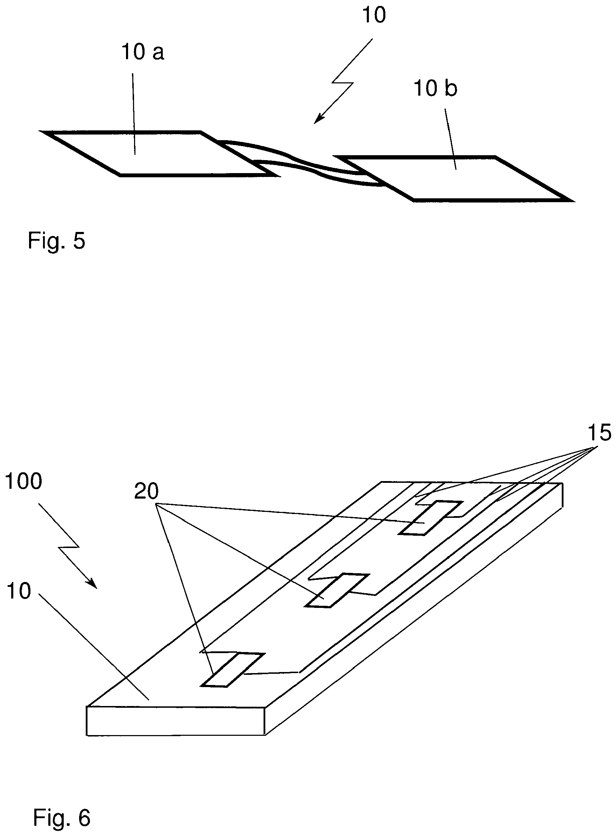

Die Sensorbaugruppe ist in einer nicht erfindungsgemäßen Ausführung als flacher Streifen ausgeführt (Fig. 4 b), d.h. die Höhe ist dabei sehr viel geringer als die Breite, wobei die Breite geringer als die Länge ist. Es ist auch möglich eine längere Sensorbaugruppe aus einem Träger 10 mit zwei oder auch aus mehreren Abschnitten 10 a, 10 b, die später die Sensorelemente aufnehmen, zu bilden und die Abschnitte untereinander mit jeweils einem flexiblen Teilabschnitt zu verbinden, wobei der Teilabschnitt insbesondere auch die elektrischen Leitungen für die Stromversorgung und die Signale der Sensorelemente enthält (Fig. 5).

Fig. 6 zeigt eine perspektivische Ansicht einer Sensorbaugruppe 100 in einer nicht erfindungsgemäßen Ausführung mit einem streifenförmigen Träger 10. Der Träger 10 kann dabei aus einem starren oder aus einem flexiblen Material hergestellt, oder aber auch aus einem Verbund mehrerer Schichten gleichen oder unterschiedlichen Materials hergestellt sein. Der Träger 10 fungiert In der nicht erfindungsgemäßen Ausführung gleich mit als Leiterplatte und ist mit entsprechenden Leiterbahnen 15 sowie Punkten zur Kontaktierung der Sensorelemente 20 und / oder evtl. weiterer elektrischer Bauteile oder -gruppen ausgestattet. Die Leiterbahnen 15 sowie auch die Kontaktflächen für die Sensoren können direkt auf den Träger oder auch auf einer Folie, welche später auf den Träger auflaminiert wird, aufgebracht werden.

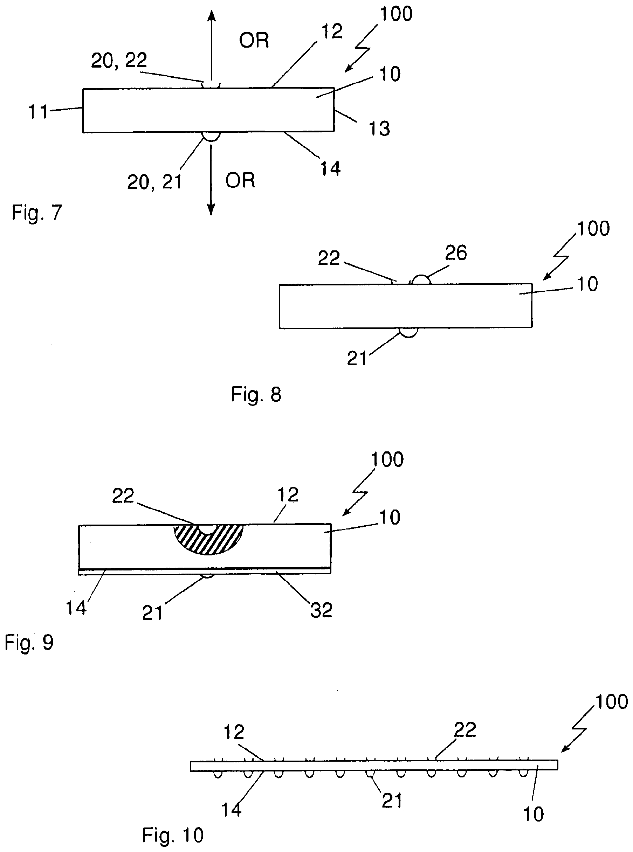

Fig. 7 zeig die Vorderansicht einer nicht erfindungsgemäßen Sensorbaugruppe 100 mit jeweils einem auf einer Außenfläche 12, 14 angeordneten Sensorelement 20. Die Sensorelemente 20 sind jeweils als Exemplare einer Art, und zwar als Signalgeber 21 oder als Signalempfänger 22 ausgebildet. Signalgeber und -empfänger sind für Signale einer Art ausgelegt. Nach dem Sender-Empfänger Prinzip können das alle Arten von sende- und empfangsfähigen Signalen sein, insbesondere Lichtsignale, bevorzugt IR-Licht oder akustische Signale, bevorzugt Ultraschallsignale. In den weiteren Ausführungsbeispielen wird von Lichtsignalen ausgegangen. Die Signalgeber 21 sind hier schematisch als Kreise oder geschlossene Halbkreise dargestellt, während die Signalempfänger 22 schematisch als offene Halbkreise bzw. "Schüsseln" mit der Öffnung von der entsprechenden Außenfläche wegzeigend dargestellt sind. Eine Orientierungsrichtung OR für die Sensorelemente 20 ist so zu verstehen, dass von ihrem Mittelpunkt und dem höchsten bzw. tiefsten Punkt der Kreislinie bzgl. der jeweiligen Außenfläche eine Gerade hindurchführt, die die hauptsächliche Aus- oder Eintrittsrichtung der Signale widergibt.

Bei einer weiteren Ausführung ist bei einem Signalempfänger 22 ein Prüfsignalgeber 26 beigeordnet, d.h. In unmittelbarer oder zumindest mittelbarer Entfernung des Signalempfängers 22 (Fig. 8). Damit kann die Funktionssicherheit der Sensorbaugruppe bzw. des übergeordneten Systems verbessern, indem, wenn ein Signal einer ersten gegenüberliegenden Sensorbaugruppe ausgesendet, aber keins empfangen wurde, kann hiermit die Funktionstüchtigkeit des Signalempfängers nochmals überprüft werden. Im Grunde genommen kann dasselbe Prinzip auch auf einen Signalgeber angewendet werden.

Die Sensorelemente können sowohl als Signalgeber 21 als auch als Signalempfänger 22 zumindest teilweise an einer jeweiligen Außenfläche in den Träger 10 integriert sein, um einerseits ein entsprechendes Sensorelement zu schützen oder auch um auch eine glatte Außenseite zu erhalten. In Fig. 9 ist auf einer Außenfläche 12 in einem Teilschnitt ein vollkommen in den Träger 10 integrierter Signalempfänger 22 gezeigt. An der Unterseite 14 erfolgt die Integration des Signalgebers mittels einer auflaminierten weiteren Schicht 32 derart, dass der Signalgeber 21 als zumindest teilweise in den Träger integriert gilt, wobei die Schutzschicht 32 an den entsprechenden Stellen der Position eines Sensorelements 20 Aussparungen aufweist und damit auch die Sensorelemente bzw. die entsprechenden Leiterbahnen schützt oder eine glatte Außenfläche bereitstellt (Fig. 9).

Fig. 10 zeigt eine Seitenansicht einer Sensorbaugruppe 100 mit einer Vielzahl von an einer jeweiligen Außenfläche 12, 14 angeordneten Sensorelementen 21, 22, wobei an einer Außenfläche jeweils nur Sensorelemente einer Art angeordnet sind. Auf diese Weise lassen sich viele Sensorbaugruppen kaskadierend, d.h. In immer eine Richtung orientiert miteinander kombinieren. Der Abstand der Sensorelemente auf jeweils einer Außenfläche untereinander kann so gewählt sein, dass ein Signalgeber immer nur ein Signalempfänger anspricht oder auch mehrere Signalempfänger, indem die Sensorelemente 21, 22 so nah beieinander angeordnet sind, dass sich die Signalkegel auf der Empfängerseite überlappen.

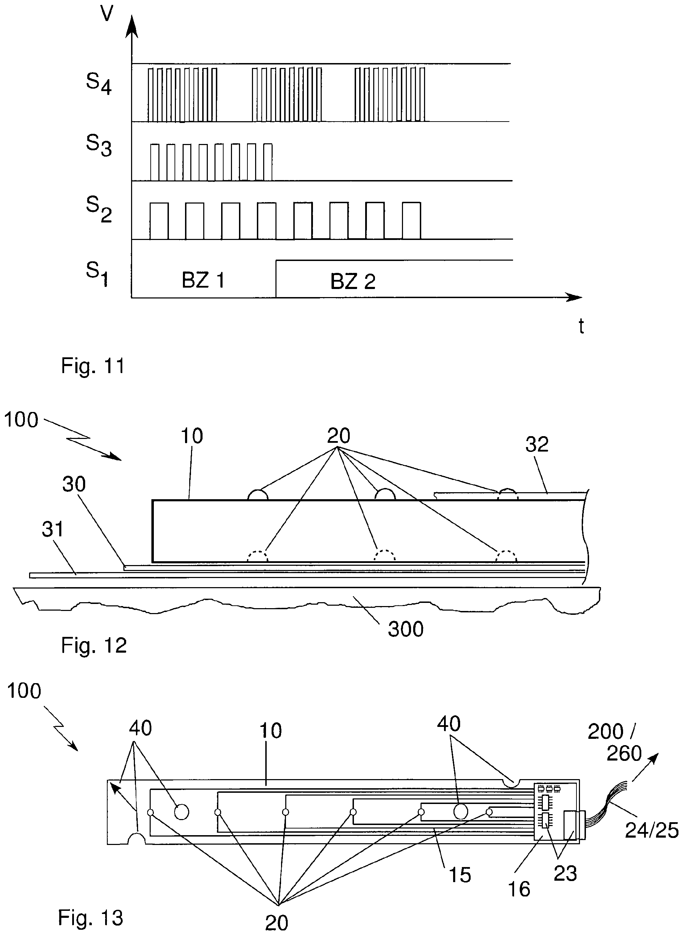

Fig. 11 zeigt ein Diagramm bezüglich mehrerer Signale an. Ein erstes Signal S1 zeigt zwei verschiedene Belegzustände BZ1 und BZ2 an wobei im Belegzustand BZ1 kein Signal S1 empfangen wird und damit als mit einem Lagergut belegter Sensorbereich interpretiert wird, wohingegen im Belegzustand BZ2 ein Signal S1 empfangen wird und damit als ein Sensorbereich ohne ein Lagergut interpretiert wird. Signale S2 - S4 zeigen Signale mit unterschiedlicher Intensität, Modulation oder mit einzelnen Frequenzblöcken. Diese Signale können zur Verbesserung der Signal- bzw. Datenintegrität verwendet werden oder aber auch um, insbesondere bei sich überlappenden Signalkegeln einzelne Sensorelemente anzusprechen oder zu identifizieren.

Fig. 12 zeigt eine Seitenansicht einer nicht erfindungsgemäßen Sensorbaugruppe mit wieder einer Vielzahl von an gegenüberliegenden Außenflächen des Trägers 10 angeordneten Sensorelementen 20, wobei die oberen Sensorelemente 20 durch eine Schutzschicht 32 zumindest teilweise in eine Schutzschicht 32 eingebettet sind und somit eine annähernd glatte Oberfläche erreicht wird. Auf der gegenüberliegenden Außenfläche sind die Sensorelemente 20 hingegen vollkommen in den Träger 10 integriert. Auf dieser Unterseite ist eine Klebeschicht 30 aufgebracht die von einer nicht klebenden Deckschicht 31 bedeckt ist. Zumindest die Klebeschicht 30 hat an den Positionen der Sensorelemente 20 entsprechende Aussparungen, um die Sensorelemente 20 nicht zu beschädigen oder zu verunreinigen, und um später die Signale ungehindert passieren zu lassen. Für eine spätere Montage wird die nicht klebende Deckschicht 31 von der Klebeschicht 30 entfernt, und kann so an einer Vorrichtung 300 ausgerichtet und mithilfe der Klebeschicht 30 an der Vorrichtung 300 befestigt werden.

Fig. 13 zeigt in einer Draufsicht eine nicht erfindungsgemäße Sensorbaugruppe 100 mit einem Träger 10 und auf dem Träger 10 befindliche Leiterbahnen 15 sowie an die Leiterbahnen 15 angeschlossene Sensorelemente 20. Am rechten Ende der Sensorbaugruppe ist eine kleine Starre Leiterplatte angebracht, welche die zur Steuerung der Sensorelemente 20 notwendige Steuerelektronik 16 enthält sowie weitere elektrische oder elektronische Bauteile 23, zum Beispiel ein Steckerelement 23 zur Stromversorgung und Entgegennahme bzw. Ausgabe von Steuersignalen 24 / 25 der Sensorelemente 20 zur Weiterleitung an ein übergeordnetes Sensorsystem 200 bzw. an ein übergeordnetes Steuersystem 260. Die Sensorbaugruppe 100 weist zusätzliche Markierungen bzw. Vorrichtung 40 zur Fixierung an einer Vorrichtung auf, die als optische Markierungen (z.B. als Pfeil) oder als Formen (z.B. Halbkreise, Bohrungen) ausgeführt sind. Insbesondere die Bohrungen können dazu herangezogen werden mit einer Schraube etc. später die Sensorbaugruppe 100 in einer bestimmten Position zu fixieren.

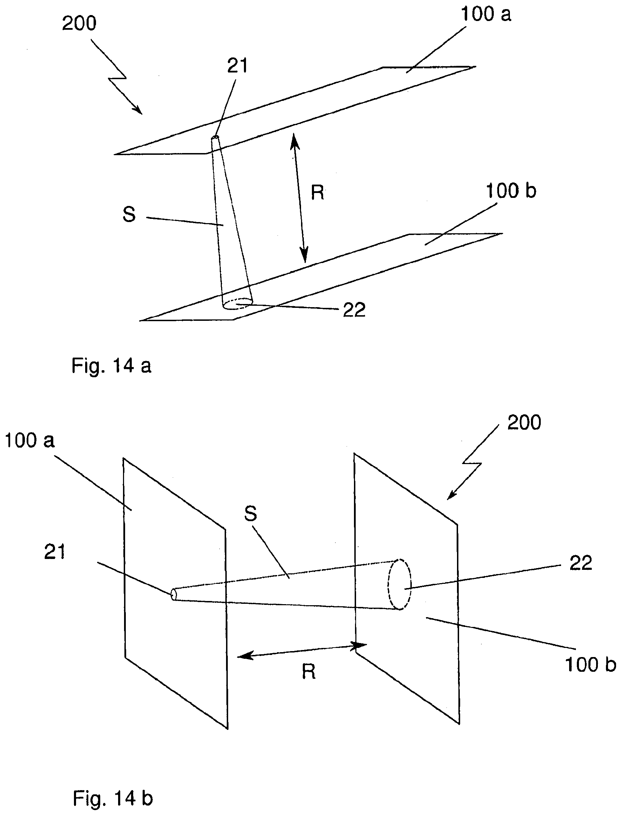

Fig. 14 a zeigt schematisch die Anordnung ein Sensorsystem 200 bestehend aus einem Überwachungsraum R und zwei diesen Raum zumindest teilweise ein - oder umfassende Sensorbaugruppen 100 a, 100 b, wobei sich die Sensorbaugruppen zumindest teilweise einander gegenüber liegen. Die Sensorbaugruppen 100 a, 100 b bzw. die an diesen einander zugewandten Außenflächen befindliche Sensorelemente 21, 22 sind dabei so angeordnet, dass zumindest ein Signalgeber 21 der ersten Sensorbaugruppe 100 a einem Signalempfänger 22 einer zweiten Sensorbaugruppe 100 b annähernd gegenüberliegt, so dass ein vom Signalgeber 21 ausgestrahltes Signal durch den Überwachungsraum R hindurch zum Signalempfänger 22 der zweiten Sensorbaugruppe 100 b gesendet und empfangen werden kann. Eine solche Anordnung kann beliebig im Raum gestaltet sein. Figur 14 b zeigt hier zwei vertikal ausgerichtete Sensorbaugruppen 100 a, 100 b, wobei das Signal S hier horizontal durch ein Überwachungsraum R hindurch gesendet und empfangen wird.

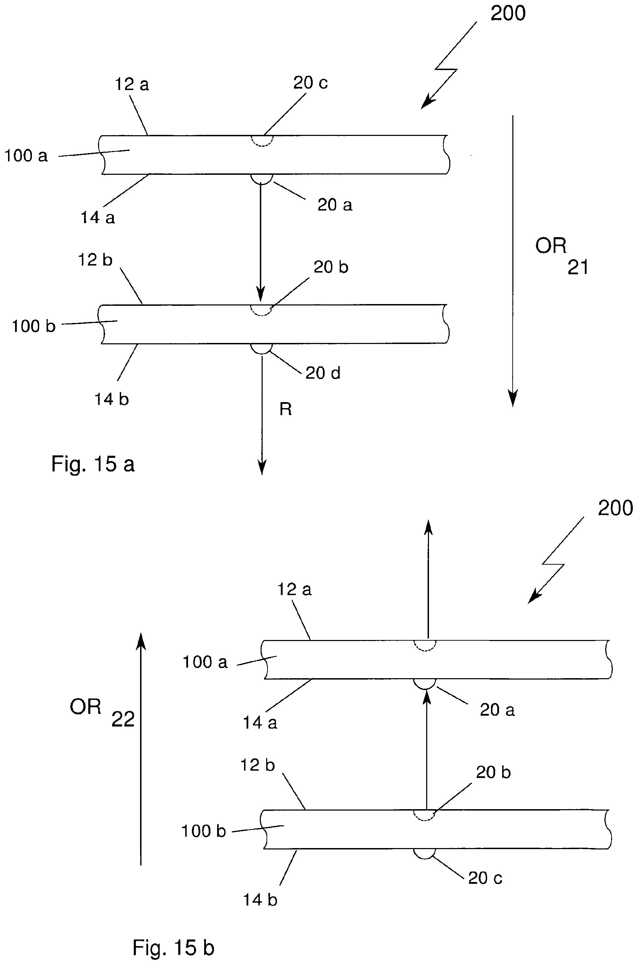

Fig. 15 a zeigt eine nicht erfindungsgemäße Ausführung eines Sensorsystem 200 in einer Seitenansicht mit einer Anordnung von zwei Sensorbaugruppe 100 a, 100 b, wobei die Sensorbaugruppe derart gegenüber einander ausgerichtet sind, dass an den einander gegenüberliegenden Außenflächen 14 a und 12 b die Sensorelemente 20 a und 20 b miteinander agieren können, d.h. ein von einem Signalsensorelement 20 a ausgesendet Signal S kann von einem zweiten Sensorelement 20 b empfangen werden.

Die Sensorelemente sind dabei derart zueinander positioniert und von ihrer Art her gewählt, so dass sich bei Sensorbaugruppen 100 a, 100 b an ihren einander zugewandten Außenflächen 14 a und 12 b immer jeweils ein Signalgeber 21 und ein Signalempfänger 22 gegenüberliegen (Fig. 15 b). An den jeweils voneinander abgewandten Außenflächen der beiden Sensorbaugruppen 100 a, 100 b sind weitere Sensorelemente angeordnet, die jeweils komplementär zu demjenigen Sensorelement sind, welches auf der jeweiligen Sensorbaugruppe auf der, der anderen Sensorbaugruppe zugewandten Außenfläche liegt. Komplementär heißt hier die jeweils andere Art eines Sensorelements. In Fig. 15 a liegt die Sensorbaugruppe 100 a mit ihrer Außenfläche 14 a mit einem Signalgeber 20 a der Außenfläche 12 b der Sensorbaugruppe 100 b mit einem Signalempfänger 20 b gegenüber. Somit ist auf der, der nicht der Sensorbaugruppe 100 b gegenüberliegenden Außenfläche 12 a das weitere Sensorelement 20 c als Signalempfänger ausgebildet. An der Sensorbaugruppe 100 b ist auf der, der von der Sensorbaugruppe 100 a abgewandten Außenfläche 14 b das weitere Sensorelement 20 d als Signalgeber ausgebildet. Entsprechend sind alle Sensorelemente verschiedener Sensorbaugruppen jeweils einer Art in jeweils eine Richtung OR orientiert, und zwar sind alle Signalgeber in eine erste Richtung OR 21 und alle Signalempfänger in eine zweite Richtung OR 22 orientiert (Fig. 15 b).

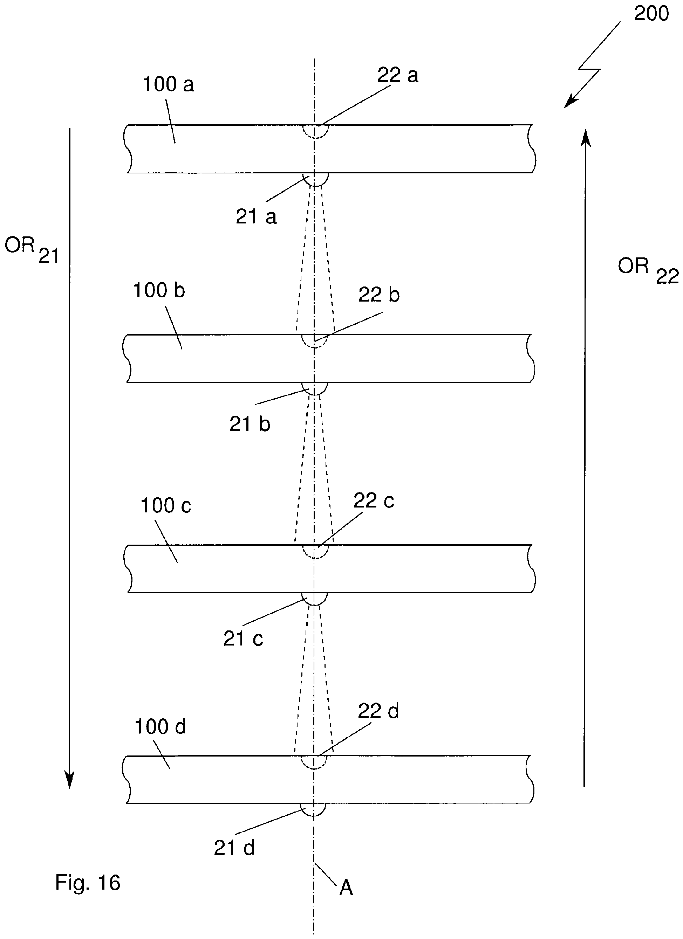

Fig. 16 zeigt ein nicht erfindungsgemäßes Sensorsystem 200 in einer Seitenansicht mit vier übereinander angeordneten Sensorbaugruppen 100 a-d, bei der die jeweiligen Signalgeber 21 a-d in eine erste Richtung OR 21 von oben nach unten und jeweils alle Signalempfänger 22 a-d in eine zweite Richtung OR 22 von unten nach oben orientiert sind. Auf diese Art ist es möglich mehrere baugleiche Sensorbaugruppen in einem gesamten Sensorsystem effizient anzuordnen und miteinander kaskadierend zu kombinieren. Dabei liegen miteinander agierende Sensorelemente zumindest zweier benachbarter Sensorbaugruppen auf einer gemeinsamen Achse A.

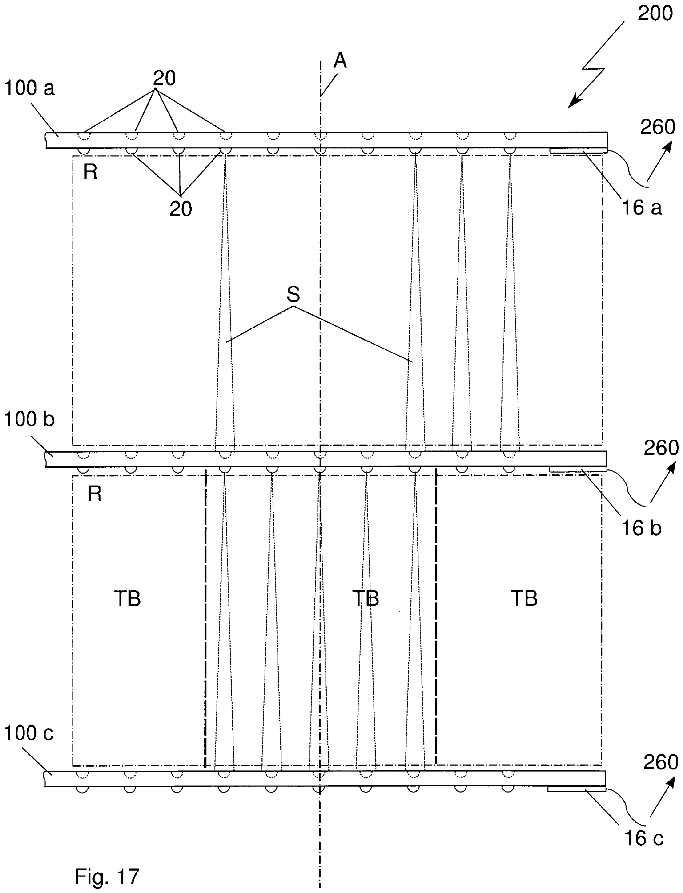

Figur 17 zeigt ein nicht erfindungsgemäßes Sensorsystem 200 mit drei jeweils übereinander angeordneten Sensorbaugruppen 100 a-c, die jeweils eine Vielzahl von Sensorelementen 20 aufweisen. Die Sensorelemente jeweils einer Art sind wieder ausschließlich in eine erste Richtung OR 21 und in eine zweite Richtung OR 22 orientiert. Die jeweils miteinander agierenden Sensorelemente unterschiedlicher Sensorbaugruppen liegen alle jeweils auf einer gemeinsamen Achse A. Zwischen jeweils zwei gegenüberliegenden Sensorbaugruppe 100 befindet sich jeweils eine Überwachungsraum R mit einer Vielzahl von zumindest paarweise zusammen agierenden Signalelemente unterschiedlicher Sensorbaugruppen. Die Überwachungsräume R können in kleinere Teilbereiche TB unterteilt werden, indem die Steuerelektronik 260 jeweils Gruppen definiert und diese Gruppen den entsprechenden Teilbereichen TB zuordnet.

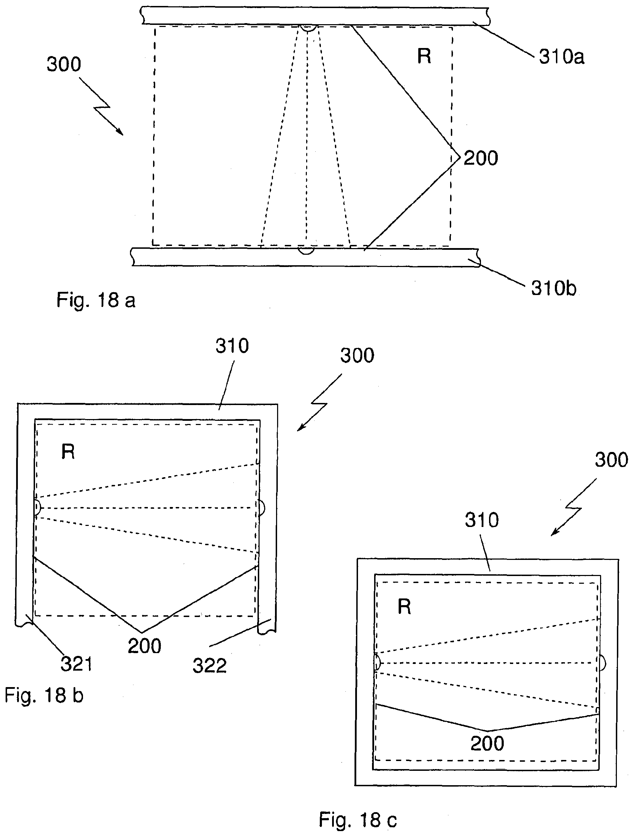

Figuren 18 a-c zeigen schematisch eine Lagervorrichtung 300 mit einem Sensorsystem 200. Dazu weist die Lagervorrichtung 300 einen Lagerraum R zur Aufnahme bzw. einer Abstellfläche für ein Lagergut auf, welcher von einem Begrenzungselement 310 (Fig. 18 c) oder von Abschnitten 321, 322 eines Begrenzungselements 310 (Fig. 18 b) oder von zwei verschiedenen Begrenzungselementen 310 a, 310 b (Fig. 18 a) zumindest teilweise ein- bzw. umfasst ist.

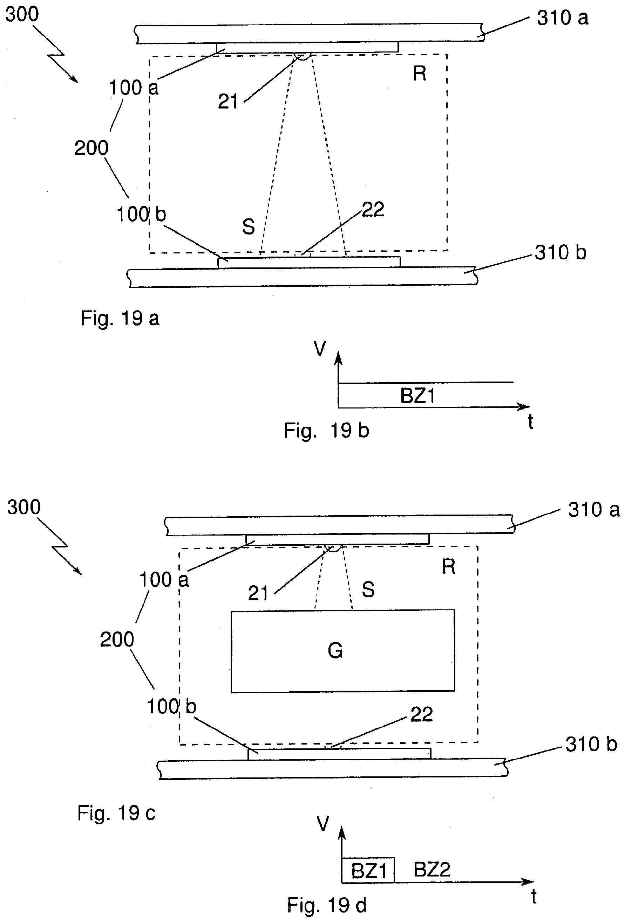

In einer nicht erfindungsgemäßen Ausführungsform ist dazu ein Sensorsystem 200 mit zwei unterschiedlichen Sensorbaugruppe 100 a, 100 b an zwei Begrenzungselementen 310 a, 310 b derart angeordnet, dass zumindest ein Signalgeber 21 der ersten Sensorbaugruppe 100 a mit zumindest einem Signalempfänger 22 der zweiten Sensorbaugruppe 100 b agieren kann, wobei ein vom Signalgeber 21 gesendet Signal S durch den Überwachungsraum R zum Signalempfänger 22 gesendet wird (Fig. 19 a). Versperrt kein Lagergut den Weg des Signals S, so empfängt Signalempfänger 22 das vom Signalgeber 21 ausgesendete Signal S und interpretiert das als einen ersten Belegungszustand BZ1, nämlich dass kein Lagergut im Überwachungsraum R enthalten ist (Figur 19 b).

Ist jedoch im Überwachungsraum R ein Lagergut G enthalten, so ist der Signalweg S gestört und ein von einem Signalgeber 21 ausgesendeten Signal S kann vom Signalempfänger 22 nicht empfangen werden (Fig. 19 c), was als zweiter Belegzustand BZ 2 interpretiert wird, nämlich dass ein Lagergut im Überwachungsraum R vorhanden ist (Figur 19 d).

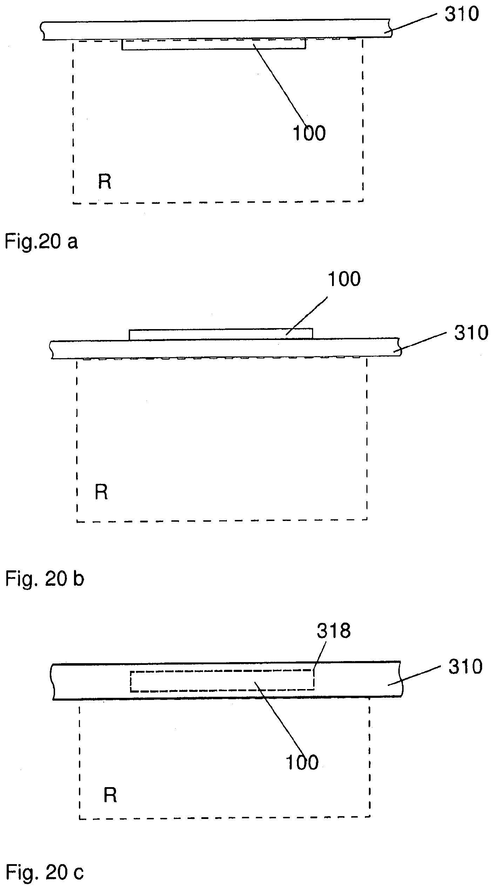

Figuren 20 a-c zeigen verschiedene nicht erfindungsgemäße Möglichkeiten der Anordnung einer Sensorbaugruppe 100 an einem Begrenzungselement 310. Eine Sensorbaugruppe 100 kann entweder an einer zum Überwachungsraum R zugewandten Außenfläche eines Begrenzungselements 310 angeordnet sein (Fig. 20 a). Eine zweite Möglichkeit ist, die Sensorbaugruppe 100 an einer vom Überwachungsraum R abgewandten Außenfläche eines Begrenzungselements 310 anzuordnen (Figur 20 b). Eine weitere Möglichkeit ist eine Sensorbaugruppe 100 zumindest teilweise in ein Begrenzungselement 310 in einer entsprechenden Aussparung 318 zu integrieren (Figur 20 c).

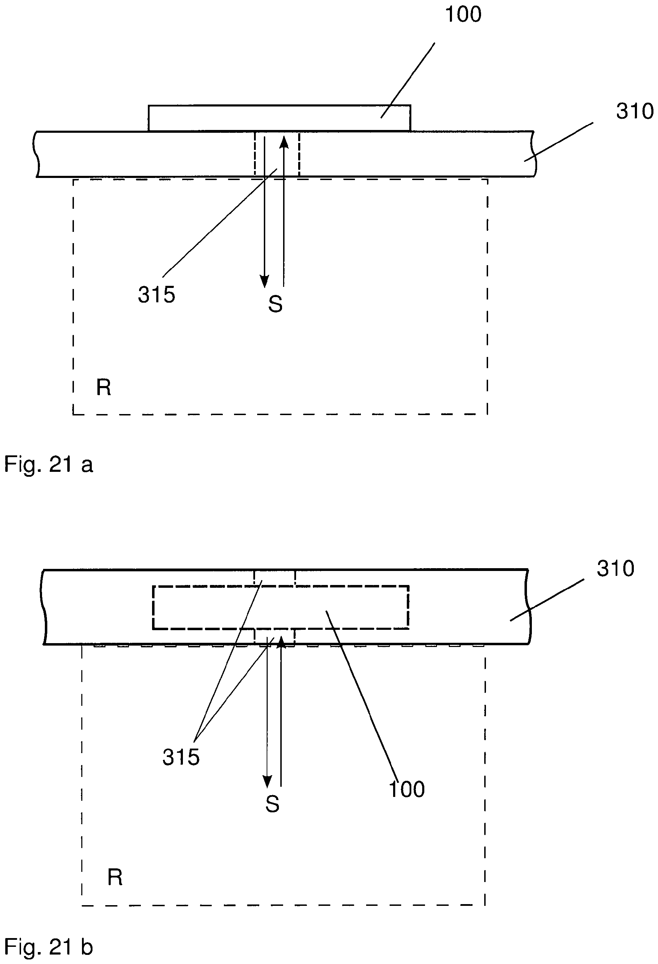

In einer nicht erfindungsgemäßen Ausführungsform für die Anordnung einer Sensorbaugruppe 100 nach den Figuren 20 b und 20 c, wonach die Sensorbaugruppe 100 und daran angeordnete Sensorelemente 20 keinen Zugang zum Überwachungsraum R hätten und so keine Signale S senden oder empfangen könnten, wird in das Begrenzungselement 310 eine Öffnung als Signalöffnung 315 für die Durchleitung von Signalen der Sensorelemente eingebracht (Fig. 21 a). Diese Signalöffnung 315 kann in das Begrenzungselement 310 entweder gestanzt oder gebohrt werden und ermöglicht einem Sensorelement 20 eine Interaktion mit einem komplementären Sensorelement durch den Überwachungsraum R hinweg. Fig. 21 a zeigt eine an einer vom Überwachungsraum R abgewandten Rückseite eines Begrenzungselements 310 angeordneten Sensorbaugruppe 100 mit einer Signalöffnung 315 durch die gesamte Stärke des Begrenzungselements 310. Bei einer integrierten Sensorbaugruppe 100 ist zumindest an einer Seite zumindest eine Signalöffnung 315 oder zu beiden Seiten zumindest zwei Signalöffnungen 315 an den entsprechenden Stellen der Sensorelemente 20 angebracht (Fig. 21 b).

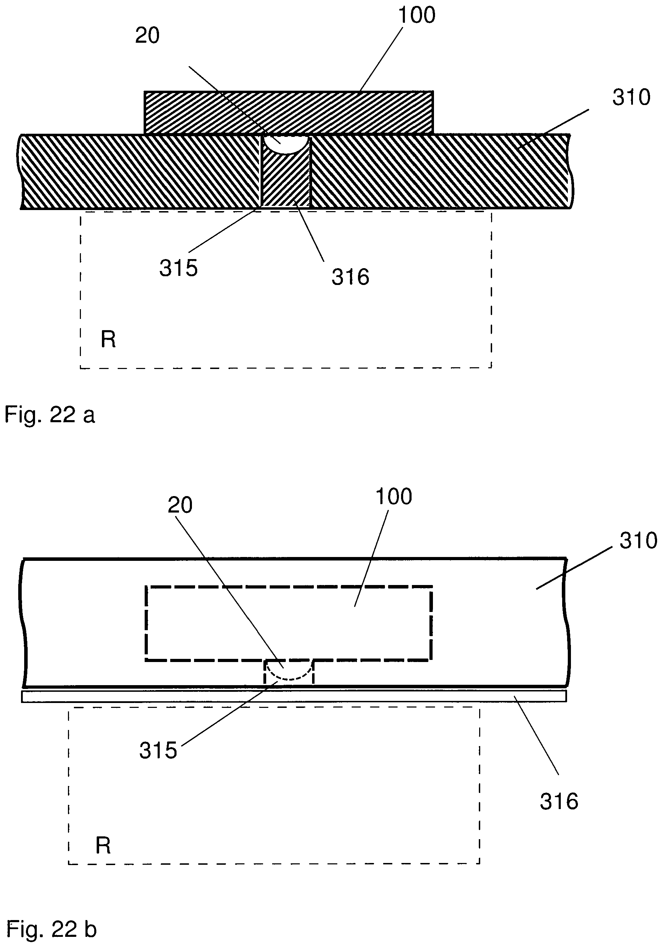

Das Sensorelement 20 kann an der Oberfläche der Sensorbaugruppe 100 vorstehen und kann damit zumindest teilweise eine solche Signalöffnung 315 ausfüllen. Dabei wird die Sensorbaugruppe in Bezug auf das Begrenzungselement positioniert und zumindest ansatzweise fixiert, so dass das zumindest eine Sensorelement 20 sicher mit der Signalöffnung 315 in Deckung kommt. In einer weiteren Ausführungsform ist die Signalöffnung 315 mit einem für die von den Sensorelementen verwendete Signalart durchlässiges Material 316 zumindest teilweise aufgefüllt, z.B. mit einem transparenten Kunstharz. So ist eine glatte Oberfläche vorhanden und es kann sich in die Signalöffnungen kein Schmutz festsetzen, der die Signale stören würde (Fig. 22 a).

Alternativ oder zusätzlich kann auch eine weitere Schutzschicht 316 aufgebracht werden, z.B. eine Folie oder ein Klebeband aus einem transparenten Material (Fig. 22 b).

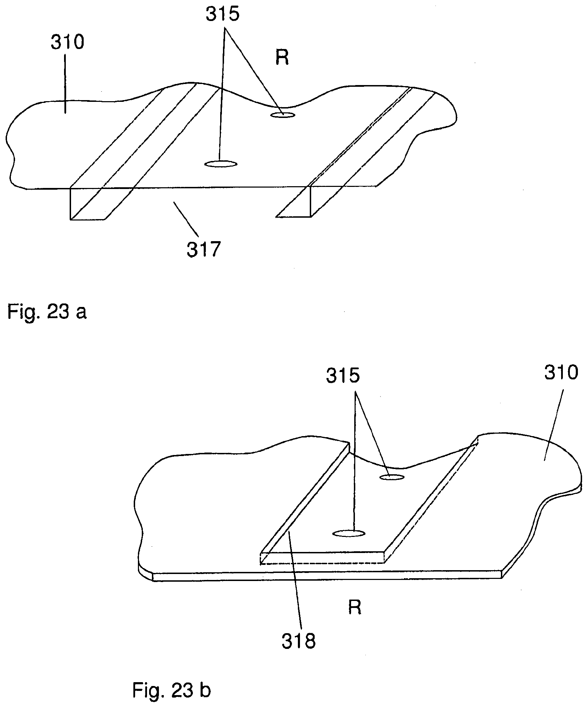

Zur Anordnung einer Sensorbaugruppe 100 ist in einer Ausführungsform der Erfindung eine Vorrichtung (Fig. 23 a) oder ein Aufnahmeraum 318 (Fig. 23 b) an einem Begrenzungselement 310 angeordnet. Fig. 23 a zeigt eine Vorrichtung mit einer Öffnung 317 in die sich eine Sensorbaugruppe (nicht dargestellt) schieben lässt und von der Vorrichtung hintergriffen wird, so dass die Sensorbaugruppe an einer Außenfläche sicher gehalten ist. In dem Begrenzungselement 310 sind zum Überwachungsraum R entsprechende Signalöffnung 315 eingebracht damit die Sensorelemente einer Sensorbaugruppe (nicht dargestellt) Signale senden oder empfangen können.

Fig. 23 b zeigt eine zur Aufnahme einer Sensorbaugruppe (nicht dargestellt) bestimmte Ausnehmung in Form einer von oben zugänglichen Vertiefung 318. Darin wird in einer weiteren Ausführungsform bündig abschließend eine Sensorbaugruppe 100 eingelegt. In der Vertiefung sind sich nach unten öffnende Signalöffnungen 315 eingebracht.

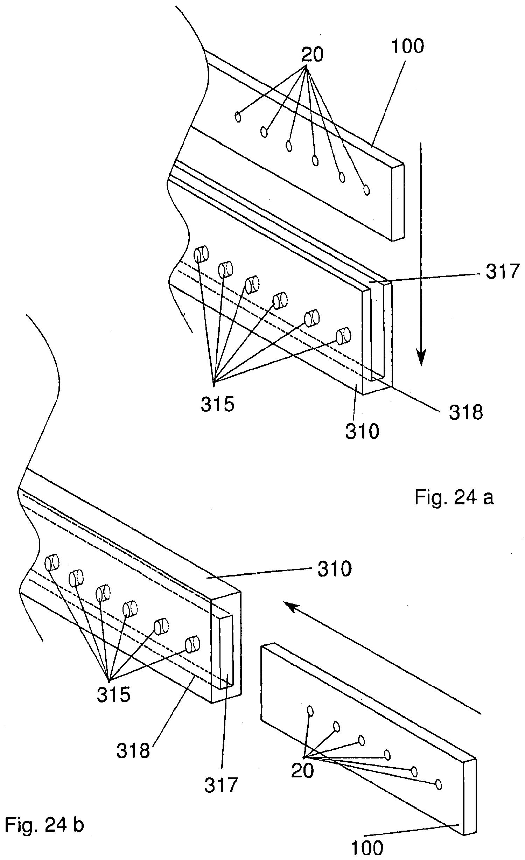

Fig. 24 a zeigt ein Begrenzungselement 310 mit einer nach oben 317 geöffneten Ausnehmung 318, in die von oben eine Sensorbaugruppe 100 eingebracht werden kann. Fig. 24 b zeigt ein Begrenzungselement 310 mit einer zur Seite geöffneten 317 Ausnehmung 318, in die seitlich eine Sensorbaugruppe 100 einschiebbar ist.

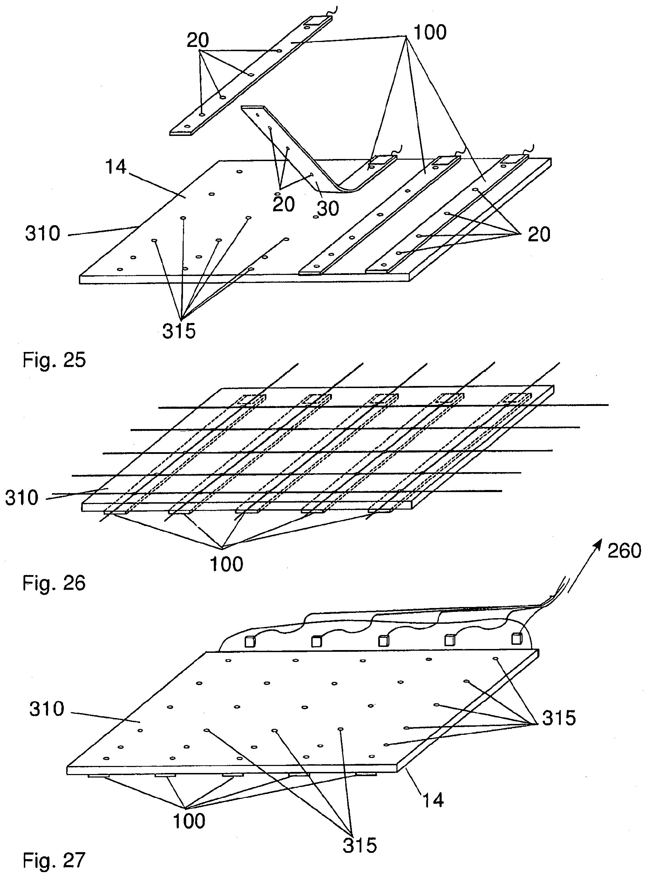

Figur 25 zeigt die Unterseite 14 eines plattenförmigen Begrenzungselement 310 mit einer oben liegender Auflageseite für Lagergüter und entsprechend einem in Bezug zur Schwerkraft F oben liegendem Überwachungsraum, an der mehrere Sensorbaugruppen 100 parallel zueinander angeordnet sind. Die Sensorbaugruppen 100 werden entsprechend der auf den Außenflächen angeordneten Sensorelemente 20 am Begrenzungselement 310 so ausgerichtet, dass die Sensorelemente 20 mit den entsprechenden Signalöffnungen 315 zur Deckung kommen. Die flexiblen Sensorbaugruppen 100 werden anschließend mit der an einer Seite vorhandenen Klebeschicht an der Außenfläche 14 des Begrenzungselements 310 fixiert.

Jede Sensorbaugruppe 100 verfügt über eine Vielzahl von Sensorelementen 20, die jeweils in einer Reihe an der jeweiligen Sensorbaugruppe 100 angeordnet sind. Da am Begrenzungselement 310 mehrere Sensorbaugruppen 100 jeweils parallel zueinander angeordnet sind ergibt sich eine Sensormatrix (Fig. 26), die jeweils mit einer Steuerelektronik 260 gezielt auch in Teilbereichen angesteuert und oder ausgewertet werden kann (Fig. 27).

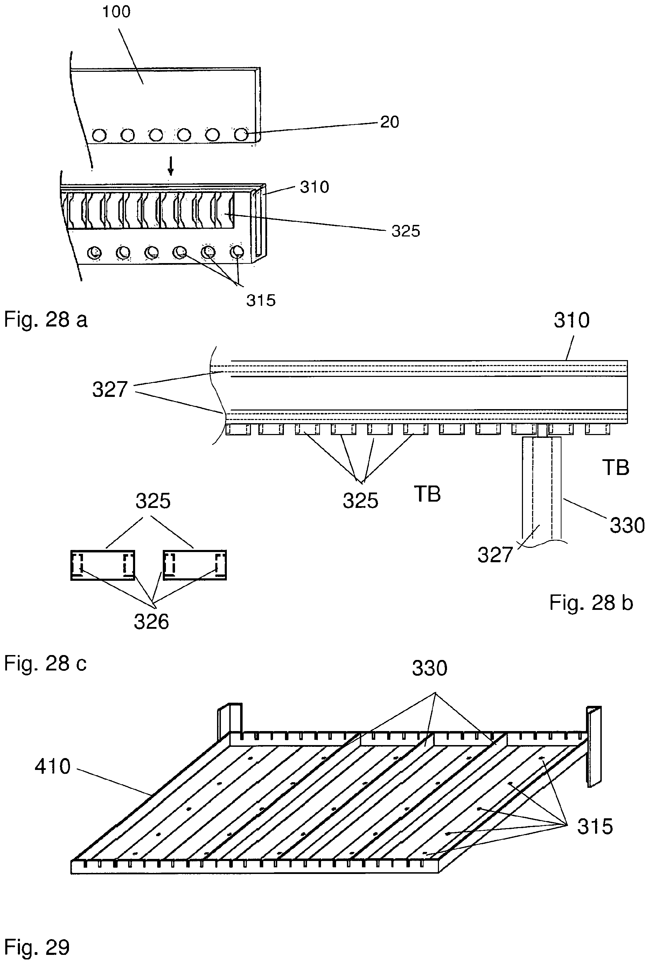

In einer bevorzugten Ausführung haben die einen Überwachungsraum ein- oder umfassende Begrenzungselemente 310 Vorrichtungen 325 (Fig. 28 a) zur Aufnahme von weiteren Begrenzungselementen 310 bzw. von Trennelementen 330 zur Einrichtung von Teilbereichen TB innerhalb eines Überwachungsraums R (Fig. 28 b). Die weiteren Begrenzungselemente 310 oder Trennelemente 330 werden dazu von oben in die Vorrichtungen 325 eingeschoben, so dass eine annähernd rechtwinklige Ecke und in Verbindung mit dem gleichen Prozedere am anderen Ende des eingeschobenen Begrenzungselemente 310 oder Trennelemente 330 insgesamt ein abgetrennter Teilbereich TB entsteht. In einer Ausführungsform beinhalten die Vorrichtungen 325 seitlich Kontaktflächen 326 (Fig. 28 c), so dass dort eingeschobene Begrenzungselemente und die darin enthaltenen Sensorbaugruppen elektrisch mit dem Sensorsystem bzw. der Lagervorrichtung verbunden sind. Weiter enthalten die Begrenzungselemente 310 oder Trennelemente 330 Strom- und Datenleitungen 327, um eingeschobene Elemente in die Energieversorgung und Datenleitungen der Schublade einzubinden (Fig. 28 b).

Figur 29 zeigt perspektivisch einen Regalboden 410 mit an der Unterseite 14 angeordneten Sensorbaugruppen und durch die Auflagefläche für Lagergüter durchgeführte Signalöffnungen 315. Zusätzlich ist der Regalboden durch parallel zu den Sensorbaugruppen verlaufende Trennelemente 330 in mehrere Regalfächer unterteilt. Ein um den Regalboden allseitig umlaufender Rahmen verhindert ein seitliches Herunterfallen eingelagerter Lagergüter.

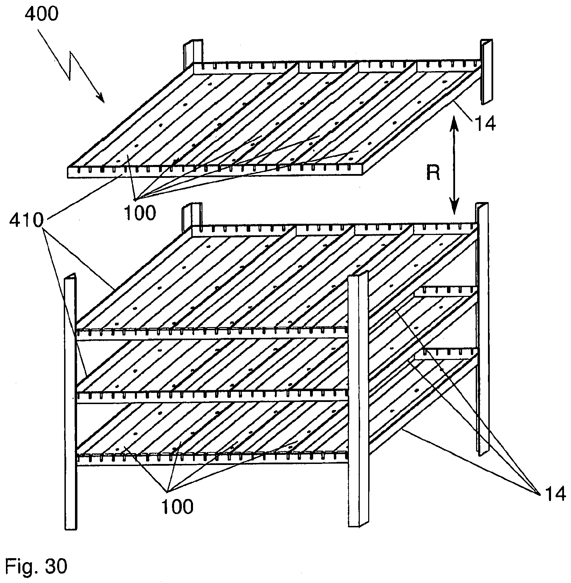

Figur 30 zeigt eine als Regal 400 ausgebildete Lagervorrichtung mit einem ersten Regalboden 410 zur Aufnahme von Lagergütern sowie weiterer Regalböden 410 wobei aufgrund der räumlichen Anordnung zueinander jeweils zwischen zwei Regalböden 410 ein Überwachungsraum R definiert ist, an dessen jeweils oberhalb befindlichen Regalboden 410 an dessen Unterseite 14 eine Vielzahl von Sensorbaugruppen 100 angeordnet sind.

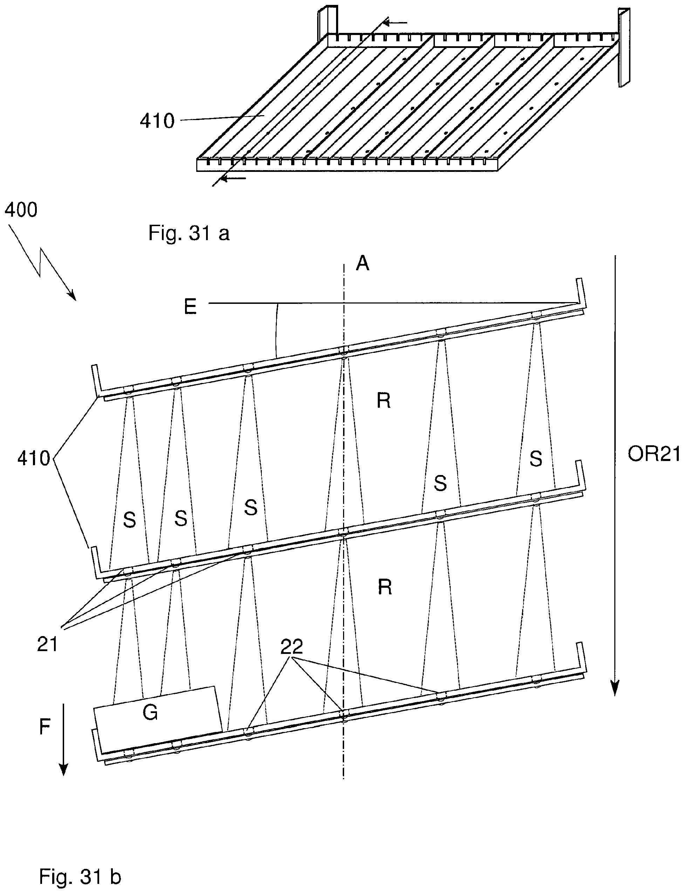

Figur 31 b zeigt einen Schnitt durch ein Regal 400 mit insgesamt drei Regalböden 410 und zwei Überwachungsräumen R. Der Schnitt geht durch eine Sensorbaugruppe 100 auf Höhe der auf einer Linie angeordneten Sensorelementen 20 (Fig. 31 a). Jeweils an der Unterseite eines Regalbodens 410 ist eine Sensorbaugruppe 100 angeordnet, wobei die Signalgeber 21 von oben nach unten (OR 21) und die Signalempfänger 22 von unten nach oben (OR 22) orientiert sind. Die Regalböden weisen an einer Seite ein Gefälle auf, welches dafür sorgt, dass die Lücke eines entnommenen Lagerguts G, z.B. ein Paket mit Schrauben durch nachrutschende Pakete geschlossen wird und immer ein Paket vorne am Entnahmepunkt bereitsteht, solange noch Pakete im entsprechenden Warenfach sind. Im Lagerfach vorhandene Pakte verhindern den Empfang der von den oberhalb der Pakete angeordneten Signalgeber 21 ausgesendeten Signale S durch die von den Paketen verdeckten Signalempfängern 22, so dass ein gesendetes, aber nicht empfangendes Signal S als ein erster Belegungszustand als "vorhanden" interpretiert wird. Dort, wo kein Paket mehr vorhanden ist kann ein Signal S empfangen werden, was als zweiter Belegungszustand und als "leer" interpretiert wird. Die einzelnen Belegzustände werden entweder periodisch oder aufgrund eines Ereignisses, z.B. eine manuelle Anfrage abgefragt und an ein übergeordnetes Verwaltungssystem weitergemeldet, welches aufgrund des Lagerplatzes bzw. der Zuordnung eines Überwachungsraums R bzw. seiner Teilbereiche zu bestimmten Waren eine Bestandsfortschreibung durchführt und ggfs. Bestellvorgänge auslöst.

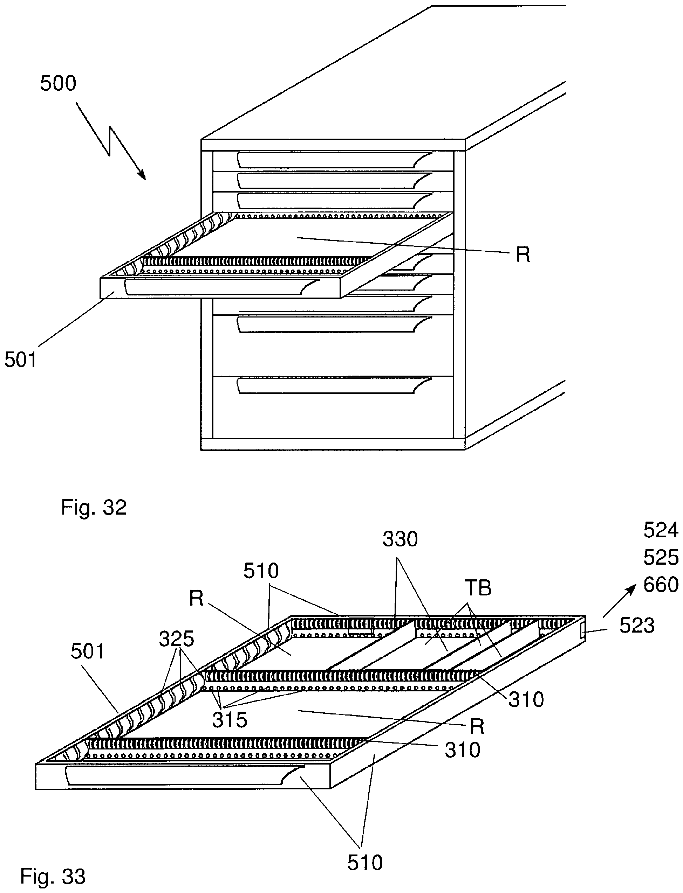

Figur 32 zeigt einen Schrank 500 als Lagervorrichtung mit zumindest einer Schublade 501 und einen im Innenraum der Schublade enthaltenen Überwachungsraum R.

Die Schublade 501 wird von einem Schubladenboden als Auflagefläche für Lagergüter und einen um den Boden herumlaufenden Rahmen aus vier Seitenwänden 510 gebildet. Die Seitenwände 510 weisen Fixiervorrichtungen 325 zum Einschieben weiterer Begrenzungselemente 310 sowie weiterer Trennelemente 330 auf. In den quer zur Auszugsrichtung angeordneten Begrenzungselementen 310 bzw. der Vorder- und Rückseiten 510 sind Sensorbaugruppen integriert, wobei an ihren zum Überwachungsraum R hin weisenden Außenflächen jeweils entsprechend den Sensorelementen Signalöffnungen 315 vorhanden sind. Auch hier sind Sensorelemente jeweils einer Art in nur eine Richtung parallel zur Auszugsrichtung orientiert. An jeweils einer Schublade 501 ist am rückwärtigen Bereich ein zentraler Stecker 523 für die Energieversorgung 525 sowie die Datenleitungen 524 angeordnet. Bei einem Öffnen wird die Schublade 501 mit dem Stecker 523 aus einem Gegenstück am Korpus des Schranks 500 herausgezogen, so dass alle elektrischen Komponenten ohne Energieversorgung sind. Falls erforderlich oder gewünscht, kann hier noch die Schublade mit einem Energiepufferspeicher versehen werden. Beim Schließen fährt die Schublade 501 mit dem Stecker 523 wieder in das Gegenstück am Korpus ein und stellt wieder eine Verbindung mit der Energieversorgung 525 sowie mit den Datenleitungen 524 her. Das Schließen löst eine Erfassung der einzelnen Belegzustände aus und die Daten werden an ein übergeordnetes System 660 zur Auswertung bzw. Bestandsfortschreibung übermittelt. (Fig. 33).

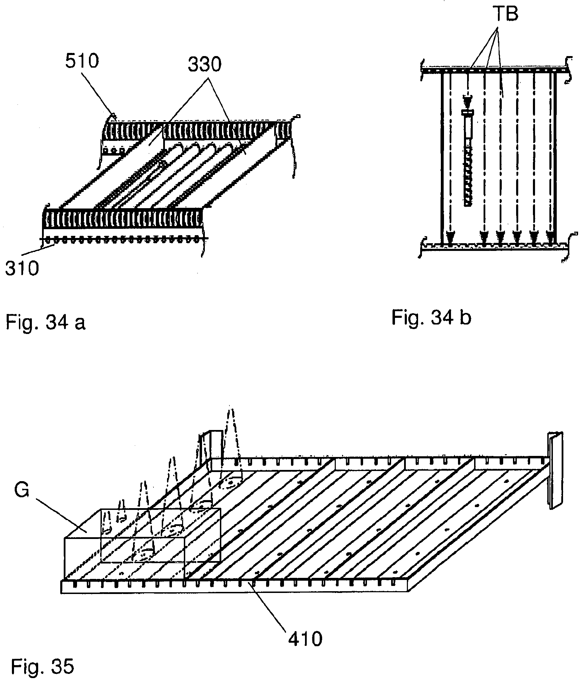

Trennelemente 330 ermöglichen auch hier eine Unterteilung einer Schublade 501 und des darin befindlichen Überwachungsraums R in kleinere Teilbereiche TB bzw. einzelne Fächer (Fig. 33 u. 34 a). Durch Einlegeböden kann je ein Teilbereich TB genau einem Sensorelementepaar zugeordnet werden (Fig. 34 a u. 34 b).

Figur 35 zeigt nochmals anhand dem Beispiel eines Regalbodens 410 und anhand der Sensormatrix wie in einer erfindungsgemäßen Ausführung Überwachungsräume geschaffen werden, die nicht nur einem Sensorstreifen entsprechen und dort mit einem Abstand von einem Sensorelement zum nächsten, sondern das sowohl in Tiefe als auch in Breite nebeneinander liegende Sensorelemente zu logischen Fächern zusammengeschaltet werden können und den tatsächlichen Größen von einzuladen Gütern nachgebildet werden, so dass je nach Größe der Güter spezifische Belegzustände im System angelegt und entsprechend abgefragt werden können.

Die Figuren 29 bis 31 b zeigen, wie oben beschrieben, einen Boden 410, der von vorne nach hinten schräg verläuft. Der Boden 410 ist durch Trennelemente 330 in in Höhenrichtung verlaufende Abschnitte unterteilt. In jedem Abschnitt werden Stücke gleichen Stückguts angeordnet, bspw. eine Kartonage mit Schrauben, wobei in einen Abschnitt bspw. vier Kartonagen angeordnet werden können. Durch die Gewichtskraft rutschen die Kartonagen in dem Abschnitt nach unten und somit nach vorne, bis eine erste Kartonage an einem vorderen Rand des Bodens 410 anliegt.

Jedem Abschnitt ist eine Sensorbaugruppe 100 zugeordnet und in der Steuerelektronik 16 bzw. dem Steuersystem 260 ist programmtechnisch hinterlegt, welches Stückgut G mit der entsprechenden Sensorbaugruppe 100 "verheiratet" ist. Mit anderen Worten ist programmtechnisch jeder Sensorbaugruppe 100 (und somit jedem Abschnitt) ein Stückgut G, bspw. eine Kartonage mit Schrauben, zugeordnet. In einer ersten Variante erfolgte diese Zuordnung darüber, dass die Sensorbaugruppe 100 eine eindeutige lD erhält. In einer zweiten Variante erfolgt diese Zuordnung darüber, dass die Signalempfänger 22 der Sensorbaugruppe eine eindeutige ID aufweisen.

In der Steuerelektronik 16 bzw. dem Steuersystem 260 ist programmtechnisch ferner die Standfläche des jeweiligen Stückguts auf dem Boden 410 hinterlegt, insbesondere die Länge des Stückguts G in Längsrichtung des Abschnitts.

Haben die Signalempfänger 22 einer Sensorbaugruppe 100 jeweils eine eigene ID oder werden die Signalempfänger 22 einer Sensorbaugruppe 100 kaskadenförmig nacheinander ausgelesen, so wird der Steuerelektronik 16 bzw. dem Steuersystem 260 anhand der Signale der Signalempfänger 22 mitgeteilt, über welche Länge der Abschnitt von der vorderen Kante des Bodens 410 (an dem die erste Kartonage anliegt) in Richtung der gegenüberliegenden Kante mit Stückgut G belegt ist. Mit Hilfe der Standfläche des Stückguts G auf dem Boden G bzw. der Länge des Stückguts G in Längsrichtung des Abschnitts berechnet die Steuerelektronik 16 bzw. das Steuersystem 260 die Anzahl von Stücken des Stückguts in dem Abschnitt.

Ist beispielsweise aus den Signalen der Signalempfänger 22 bekannt, dass die ersten 30 cm eines Abschnitts von der vorderen Kante des Bodens 410 belegt sind (diese Signalempfänger 22 empfangen kein Signal) und bekannt, dass ein Stückgut bzw. ein Karton in Längsrichtung des Abschnitts eine Länge von 15 cm hat, so berechnet die Steuerelektronik 16 bzw. das Steuersystem 260, dass auf dem Abschnitt zwei Stücke des Stückguts G angeordnet sind.

Ein Regal der Figuren 29-31 b kann wie folgt betrieben werden:
Zunächst wird das Regal mit den entsprechenden Böden 410 bereitgestellt und jeder Boden 410, vorzugsweise mit Trennelementen 310, in Abschnitte unterteilt. In jedem Abschnitt werden Stücke gleichen Stückguts angeordnet. Wie oben beschrieben, wird in der Steuerelektronik 16 bzw. in dem Steuersystem 260 programmtechnisch jedem Abschnitt ein Stückgut, bspw. Kartonage mit Schrauben, zugeordnet. Durch Empfangen und Auswerten von Signalen der Signalempfänger 22 in der Steuerelektronik 16 bzw. in dem Steuersystem 260 ergibt sich, wie viele Stücke des Stückguts G in dem jeweiligen Abschnitt angeordnet sind.

In der Steuerelektronik 16 bzw. in dem Steuersystem 260 kann ferner programmtechnisch hinterlegt sein, dass in dem Fall, in dem die Anzahl von Stücken des Stückguts in einem Abschnitt eine vorbestimmte Schwelle erreicht, ein Bestellsignal gesendet wird. In dem vorliegenden Beispiel kann bspw. in dem Fall, dass nur noch eine Kartonage in dem Abschnitt angeordnet ist, ein Bestellsignal von der Steuerelektronik 16 bzw. dem Steuersystem 260 gesandt wird.

Das Absenden des Bestellsignals kann bspw. das Absenden einer Mail oder das Absenden einer SMS sein. Das Bestellsignal kann an eine für die Nachbestellung verantwortliche Person oder an ein Bestellsystem, das die Bestellung automatisch beauftragt, gesandt werden. Das Bestellsignal umfasst bevorzugt Informationen zur Kennzeichnung des Stückguts, bspw. eine Artikelnummer, Informationen zu der benötigten Anzahl von Stücken des Stückguts sowie eine Information zur Identifikation des Bodens (410) bzw. zu dem Regal (400), d.h. der Vorrichtung zur Lagerung von Stückgut, um eine postalische Adressierung einer Nachlieferung des Stückguts zu ermöglichen, d.h. eine Adresse für die Nachbestellung angeben zu können.

Ein derartiges Regal kann mit dem beschriebenen Verfahren von einem Bediener somit wie folgt verwendet werden: Der Bediener ordnet dem Abschnitt zwischen zwei Trennelementen 330 ein bestimmtes Produkt (Stückgut G) zu und ordnet eine bestimmte Anzahl der Produkte in dem Abschnitt an. Ferner hinterlegt der Bediener einen Schwellwert von Stücken des Stückguts in dem Abschnitt, bei dessen Erreichen eine Nachbestellung desselben Stückguts ausgelöst werden soll, sowie eine Anzahl von Stücken des Stückguts, die in dem Fall nachbestellt werden soll. Entnimmt der Bediener folgend Stücke des Stückguts, d.h. Produkte, aus dem Abschnitt, so entspricht die Anzahl der in dem Abschnitt vorhandenen Stücke zu einem bestimmten Zeitpunkt dem hinterlegten Schwellwert für diese Produkte, so dass ein Bestellsignal von Steuerelektronik 16 bzw. dem Steuersystem 260 abgesandt wird, bspw. eine Mail mit Informationen zur Kennzeichnung des Stückguts, bspw. eine Artikelnummer, Informationen zu der benötigten Anzahl von Stücken des Stückguts sowie eine Information zur Identifikation des Bodens 410 bzw. zu dem Regal 400, d.h. der Vorrichtung zur Lagerung von Stückgut, um eine postalische Adressierung einer Nachlieferung des Stückguts zu ermöglichen, d.h. eine Adresse für die Nachbestellung angeben zu können.

Folgend werden noch vorteilhafte Ausgestaltungen beschrieben:
Vorteilhaft ist eine Sensorbaugruppe vorgesehen, aufweisend ein Trägerelement mit mindestens zwei Sensorelementen wobei die Sensorelemente an unterschiedlichen Außenflächen des Trägerelements angeordnet sind.

Bevorzugt ist, dass das Trägerelement einen eckigen, bevorzugt einen dreieckigen oder einen viereckigen insbesondere einen quadratischen oder rechteckigen Querschnitt hat.

Es wird vorgeschlagen, dass das Trägerelement eckig, kreisförmig, kreuzförmig, y-förmig, streifenförmig, gitterförmig, mäanderförmig und / oder sternförmig ausgebildet ist.

Es wird weiter vorgeschlagen, dass das Trägerelement starr, flexibel oder semiflexibel ist oder zumindest zwei starre, flexible oder semiflexible Abschnitte aufweist, die miteinander verbunden sind.

Es ist möglich und wird daher vorgeschlagen, dass das Trägerelement aus einer Folie oder aus mehreren Schichten aus gleichen oder unterschiedlichen Folien und / oder Materialien aufgebaut ist.

Bevorzugt kann vorgesehen sein, dass das Trägerelement zumindest teilweise als Leiterplatte mit Leiterbahnen ausgebildet ist oder zumindest elektrische Leiterstrukturen zur elektrischen Kontaktierung und / oder Weiterleitung der Signale der Sensorelemente und / oder weiterer elektrischer und / oder elektronischer Bauteile und / oder zum Anschluss an einen Datenbus und / oder an eine Stromversorgung und / oder zur Verbindung an zumindest eine weitere Sensorbaugruppe aufweist.

Weiter wird vorgeschlagen, dass ein Sensorelement jeweils als ein Signalgeber oder als ein Signalempfänger ausgebildet ist.

Vorteilhaft ist, dass bei dem Signalempfänger ein Prüfsignalgeber derart beigeordnet ist, dass der Signalempfänger Signale des beigeordneten Prüfsignalgebers direkt oder indirekt detektieren kann.

Des Weiteren wird vorgeschlagen, dass das zumindest erste Sensorelement einer ersten Außenfläche der Sensorbaugruppe zu dem zumindest zweiten Sensorelement einer zweiten Außenfläche der Sensorbaugruppe komplementär ausgebildet ist, insbesondere, dass das erste Sensorelement als Signalgeber und das zweite Sensorelement als Signalempfänger oder dass das erste Sensorelement als Signalempfänger und das zweite Sensorelement als Signalgeber ausgebildet ist.

In Weiterbildung wird vorgeschlagen, dass die zumindest zwei Sensorelemente zueinander komplementär ausgebildet sind und an jeweils einander entgegengesetzten Außenflächen des Trägerelements angeordnet sind, insbesondere dass ein erstes Sensorelement an einer ersten Außenfläche als Signalgeber und das zweite Sensorelement an einer zweiten, zur ersten entgegengesetzten Außenfläche als Signalempfänger oder dass ein erstes Sensorelement an einer ersten Außenfläche als Signalempfänger und das zweite Sensorelement an einer zweiten, zur ersten entgegengesetzten Außenfläche als Signalgeber ausgebildet ist.

Vorteilhaft ist, dass die Sensorelemente auf oder in einer Außenfläche des Trägerelements zumindest teilweise integriert angeordnet sind.

Bevorzugt kann vorgesehen sein, dass das von zumindest einem Signalgeber emittierte und das von zumindest einem Signalempfänger empfangene Signal ein magnetisches, ein elektromagnetisches oder ein akustisches Signal ist.

In Weiterbildung wird vorgeschlagen, dass der Signalgeber zumindest eine LED, eine OLED oder einen Piezokristall aufweist oder aus einem Array dieser Elemente gebildet ist.

Insbesondere wird vorgeschlagen, dass von zumindest einem Signalgeber IR-Licht emittiert wird.

Ferner wird vorgeschlagen, dass zumindest ein Sensorelement und / oder eine Leiterbahn gedruckt ist.

Weiter wird vorgeschlagen, dass am Träger eine Steuerelektronik angeordnet ist, wobei die Steuerelektronik die Sensorbaugruppe gegenüber anderen Sensorbaugruppen eindeutig identifiziert.

Ferner wird vorgeschlagen, dass die Steuerelektronik die Sensorelemente aktiviert und die Datensignale der Sensorelemente registriert, weiterverarbeitet und weiterleitet.

In Weiterbildung wird vorgeschlagen, dass das von der Steuerelektronik erzeugte und vom Signalgeber emittierte Signal in seiner Frequenz und / oder seiner Intensität variierbar ist.

In nochmaliger Weiterbildung wird vorgeschlagen, dass das emittierte Signal derart getaktet ist, dass das Signal kodiert ist.

Ferner wird vorgeschlagen, dass ein Betriebszustand bei den vorhandenen Sensorelementen durch die Steuerelektronik einzeln, gruppenweise oder alle auf einmal aktivierbar oder abfragbar ist, insbesondere, dass ein Signalgeber ein Signal abgibt oder dass ein Signalempfänger abgefragt wird, ob er ein Signal empfängt.

Weiter wird vorgeschlagen, dass das Trägerelement an zumindest einer Außenfläche mehr als zwei, bevorzugt eine Vielzahl von Sensorelementen aufweist, die zueinander definiert angeordnet, bevorzugt auf zumindest einer Linie oder in zumindest einer Reihe angeordnet sind.

In Weiterbildung wird vorgeschlagen, dass Sensorelemente für unterschiedliche Signalarten gemeinsam an einer Außenfläche des Trägerelements gruppiert und / oder alternierend angeordnet sind.

In nochmaliger Weiterbildung wird vorgeschlagen, dass auf einer Außenfläche jeweils nur Sensorelemente einer Art angeordnet sind, insbesondere, dass die an einer Außenfläche angeordneten Sensorelemente jeweils nur als Signalgeber oder jeweils nur als Signalempfänger ausgebildet sind.

Vorteilhaft kann vorgesehen sein, dass Signalgeber und Signalempfänger gemeinsam an einer Außenfläche des Trägerelements gruppiert und / oder alternierend angeordnet sind.

Ferner wird vorgeschlagen, dass eine Markierung zur späteren Positionierung und / oder Ausrichtung der Sensorbaugruppe vorhanden ist.

Weiter wird vorgeschlagen, dass eine Fixiervorrichtung späteren Positionierung und / oder Fixierung der Sensorbaugruppe vorhanden ist.

Ferner wird vorgeschlagen, dass das Trägerelement an zumindest einer Außenfläche eine Klebefläche aufweist.

In Weiterbildung kann vorgesehen sein, dass die Klebfläche zumindest zeitweise mit einer lösbaren Deckfolie abgedeckt ist.

Weiter ist vorteilhaft vorgesehen ein Sensorsystem für eine Belegerkennung mit zumindest zwei Sensorbaugruppen wobei die Sensorbaugruppen in zumindest einer Position derart zueinander angeordnet sind, dass sie zumindest teilweise einen Überwachungsraumes umfassen und dass ein emittiertes Signal zumindest eines Signalgebers einer ersten Sensorbaugruppe von zumindest einem Signalempfänger einer zweiten Sensorbaugruppe in zumindest einem Belegzustand deteKtierbar ist, so dass ein empfangenes Signal als erster Belegzustand und ein gesendetes, aber nicht empfangenes Signal als zweiter Belegzustand interpretiert wird.

In Weiterbildung wird vorgeschlagen, dass die Sensorbaugruppen in zumindest einer Position derart zueinander angeordnet sind, dass sich zumindest jeweils eine ihrer Außenflächen zumindest teilweise gegenüberliegen und dass an den sich zumindest teilweise gegenüberliegenden Außenflächen jeweils zumindest ein Sensorelement angeordnet ist, die zueinander jeweils komplementär sind, insbesondere dass das zumindest erste Sensorelement als Signalgeber und dass das zumindest zweite Sensorelement als Signalempfänger oder dass das zumindest erste Sensorelement als Signalempfänger und dass das zumindest zweite Sensorelement als Signalgeber ausgebildet ist.

Ferner wird vorgeschlagen, dass zumindest bei einer der Sensorbaugruppen auf zumindest einer der nicht der anderen Sensorbaugruppe zugewandten Außenfläche zumindest ein weiteres Sensorelement angeordnet ist.

Weiter wird vorgeschlagen, dass zumindest bei einer der Sensorbaugruppen auf der jeweils von der anderen Sensorbaugruppe abgewandten Außenfläche zumindest ein weiteres Sensorelement angeordnet ist.

In Weiterbildung wird vorgeschlagen, dass das zumindest eine weitere Sensorelement komplementär ist zu der Art des zumindest einen Sensorelements auf der, der zumindest einen anderen Sensorbaugruppe zugewandten Außenfläche, insbesondere, dass das Sensorelement als Signalgeber und das Sensorelement als Signalempfänger oder dass das Sensorelement als Signalempfänger und das Sensorelement als Signalgeber ausgebildet ist.

In nochmaliger Weiterbildung wird vorgeschlagen, dass in Bezug auf die Anordnung der zumindest zwei Sensorbaugruppen die Sensorelemente jeweils einer Art alle dieselbe Orientierung aufweisen, insbesondere, dass alle Signalgeber in eine erste Richtung und alle Signalempfänger in eine zweite Richtung orientiert sind.

Es ist möglich und wird daher vorgeschlagen, dass die erste Richtung und zweite Richtung gegensätzlich zueinander orientiert sind.

Weiter wird vorgeschlagen, dass an einer Außenfläche einer Sensorbaugruppe oder eines Abschnitts einer Sensorbaugruppe mit Sensorelement zumindest zwei, bevorzugt eine Vielzahl von Sensorelementen angeordnet sind.

Ferner wird vorgeschlagen, dass die Sensorelemente zumindest zweier benachbarter Sensorbaugruppen jeweils annähernd auf einer gemeinsamen Achse positioniert sind.

Weiter wird vorgeschlagen, dass an den einander zugewandten Außenflächen einer Sensorbaugruppe oder eines Abschnitts einer Sensorbaugruppe mit Sensorelementen jeweils nur Sensorelemente einer Art angeordnet sind, insbesondere, dass an einer jeweiligen Außenfläche angeordnete Sensorelemente nur als Signalgeber oder nur als Signalempfänger ausgebildet sind.

In Weiterbildung wird vorgeschlagen, dass die Sensorelemente soweit zueinander beabstandet sind, dass pro kleinster zu messender Einheit wenigstens ein Paar Sensorelemente vorhanden ist, insbesondere, dass pro kleinster zu messender Einheit zumindest je ein Signalgeber und ein Signalempfänger vorhanden ist, bevorzugt, dass pro kleinster zu messender Einheit mehrere Signalgeber und mehrere Signalempfänger vorhanden sind.

Weiter wird vorgeschlagen, dass eine Steuerelektronik jeweils komplementär wirkende und miteinander agierende Sensorelemente der zumindest zwei Sensorbaugruppen oder verschiedener Sensorbaugruppen paar- oder gruppenweise koordiniert, insbesondere miteinander synchronisiert und insbesondere die Abgabe und die Erfassung von Signalen steuert.

In Weiterbildung wird vorgeschlagen, dass der Überwachungsraum in zumindest zwei Teilbereiche unterteilt ist, wobei die Teilbereiche von der Steuerelektronik jeweils logisch verwaltet werden, insbesondere zumindest ein Signalgeber und ein Signalempfänger oder eine Gruppe von komplementär wirkenden und miteinander agierenden Sensorelementen einem ersten Teilbereich zugeordnet und zumindest ein weiterer Signalgeber und ein weiterer Signalempfänger oder eine Gruppe von weiteren, komplementär wirkenden und miteinander agierenden Sensorelementen einem weiteren Teilbereich zugeordnet sind.

In nochmaliger Weiterbildung der wird vorgeschlagen, dass die Steuerelektronik die erfassten Signale auswertet und die Signale und / oder die ermittelten Belegzustände anhand einer Kommunikationsreinrichtung an eine übergeordnete Lagervorrichtung oder an eine übergeordnete Steuereinheit weitermeldet.

Weiter ist vorteilhaft vorgesehen eine Lagervorrichtung zur Lagerung und Verwaltung von Lagergut, insbesondere von Stück- und / oder Schüttgut mit mindestens einem Überwachungsraum zur Aufnahme des Lagerguts, und einem Sensorsystem.

Es wird vorgeschlagen, dass der Belegzustand und oder der Füllungsgrad des Überwachungsraum von zumindest zwei, annähernd gegenüberliegenden Sensorelementen überwacht ist, wobei in zumindest einem Belegzustand ein emittiertes Signal S zumindest eines Signalgebers einer ersten Sensorbaugruppe von zumindest einem Signalempfänger einer zweiten Sensorbaugruppe detektierbar ist, so dass ein empfangenes Signal als erster Belegzustand und ein gesendetes, aber nicht empfangenes oder ein gedämpft empfangenes Signal als zweiter Belegzustand interpretierbar ist, wobei die Kombination mehrerer Belegzustände als Füllgrad interpretierbar ist.

Ferner wird vorgeschlagen, dass der Überwachungsraum von zumindest zwei Begrenzungselemente oder von zumindest zwei Abschnitte eines Begrenzungselements zumindest teilweise begrenzt ist, wobei sich die Begrenzungselemente oder die Abschnitte jeweils mit zumindest einer Außenfläche zumindest teilweise annähernd gegenüberliegen.

Weiter wird vorgeschlagen, dass an jeweils einem Begrenzungselement oder an jeweils einem Abschnitt zumindest eine Sensorbaugruppe angeordnet ist.

Bevorzugt kann vorgesehen sein, dass zumindest eine Sensorbaugruppe an einer dem Überwachungsraum zugewandten Außenfläche eines Begrenzungselements angeordnet ist.

In Weiterbildung wird vorgeschlagen, dass zumindest eine Sensorbaugruppen auf der vom Überwachungsraum abgewandten Außenfläche des jeweiligen Begrenzungselements angeordnet ist.

In nochmaliger Weiterbildung wird vorgeschlagen, dass zumindest an einer Seite des Überwachungsraums zumindest eine Sensorbaugruppen in das jeweilige Begrenzungselement zumindest teilweise integriert ist.

Vorteilhaft kann vorgesehen sein, dass das Begrenzungselement zumindest eine Signalöffnung aufweist, so dass die zumindest eine integrierte oder die zumindest eine, an der dem Überwachungsraum abgewandten Außenfläche angeordnete Sensorbaugruppe ein Signal zu zumindest einer weiteren Sensorbaugruppe durch die Signalöffnung hindurch senden und / oder von zumindest einer weiteren Sensorbaugruppe empfangen kann.

Diese Ausführung ist maßgeblich daran beteiligt, dass Sensorbaugruppen mit Sensoren auf einander entgegen gesetzten Außenflächen eines Trägers verwendet werden können, da dadurch Sensoren beider Seiten am Prozess beteiligt sein und mit anderen Sensoren interagieren können. Auf der anderen Seite ist es dadurch auch möglich, die Hälfte der sonst notwendigen Sensorbaugruppen einzusparen, da mit dieser Ausführungsform Sensoren Zugriff auf 2 Seiten erhalten und nicht jeweils eine Seite durch ein normalerweise undurchlässiges Begrenzungselement behindert wird bzw. sonst nur einseitig bestückte Sensoren verwendet werden.

In Weiterbildung kann vorgesehen sein, dass die Signalöffnung zumindest teilweise durch ein Sensorelement ausgefüllt ist und / oder dass die Signalöffnung zumindest teilweise durch ein für das Signal durchlässiges Material abgedeckt und / oder aufgefüllt ist.

Weiter kann vorgesehen sein, dass zumindest ein Begrenzungselement eine Vorrichtung oder Aussparung zur zumindest teilweisen Aufnahme zumindest einer Sensorbaugruppe aufweist.

Insbesondere kann weiter vorgesehen sein, dass die Vorrichtung oder Aussparung an zumindest einer Außenfläche eine Öffnung zum Einbringen eines Begrenzungselements aufweist.

Vorteilhaft kann vorgesehen sein, dass zumindest eine Sensorbaugruppe an zumindest einem Begrenzungselement in Bezug auf einen Bezugspunkt der Lagervorrichtung und / oder des Begrenzungselements und / oder zumindest einer weiteren Sensorbaugruppe in einer definierten Position fixiert ist.

Weiter wird vorgeschlagen, dass zumindest eine Sensorbaugruppe an zumindest einem Begrenzungselement angeklebt ist.

Weiter wird vorgeschlagen, dass zumindest zwei, bevorzugt eine Vielzahl von Sensorbaugruppen annähernd parallel zueinander an einem Begrenzungselement angeordnet sind, wobei die in die einer Ebene angeordneten Sensorelemente eine Sensormatrix bilden.

Es ist möglich und wird daher vorgeschlagen, dass an jeweils zumindest zwei gegenüberliegenden und somit annähernd parallel zueinander ausgerichtete Begrenzungselementen zumindest ein, bevorzugt mehrere Trennelemente angeordnet sind, wobei die Trennelemente quer zu den Begrenzungselementen verlaufen, so dass zumindest zwei, bevorzugt eine Vielzahl von Überwachungsräumen gebildet ist.

In Weiterbildung wird vorgeschlagen, dass an zumindest einem Begrenzungselement an zumindest einer Außenfläche zumindest eine Fixiervorrichtung für zumindest ein Trennelement vorhanden ist.

In nochmaliger Weiterbildung wird vorgeschlagen, dass eine Vielzahl von Fixiervorrichtungen an zumindest einer Seite eines Begrenzungselements angeordnet sind, so dass eine variable Unterteilung des Überwachungsraums möglich ist.

Weiter wird vorgeschlagen, dass jedem Überwachungsraum zumindest ein Signalgeber und ein Signalempfänger zugeordnet ist.

Insbesondere wird vorgeschlagen, dass die Lagervorrichtung ein Regal ist und zumindest ein erstes Begrenzungselement einen Regalboden bildet.

Weiter wird vorgeschlagen, dass jeweils weitere Begrenzungselemente weitere Regalebenen im Regal bilden, wobei der Raum zwischen jeweils zwei Regalebenen zumindest einen Überwachungsraum bildet:
Ferner wird vorgeschlagen, dass die zumindest eine Sensorbaugruppe entsprechend der Schwerkraft jeweils unterhalb des jeweiligen Regalbodens einer Regalebene angeordnet ist.

Es ist möglich und wird daher vorgeschlagen, dass Sensorelemente verschiedener Regalebenen entsprechend ihrer jeweiligen Position auf der Sensorbaugruppe jeweils annähernd auf einer gemeinsamen Achse ausgerichtet sind, wobei die Achse entsprechend zur Schwerkraft vertikal verläuft.

Weiter wird vorgeschlagen, dass Sensorelemente verschiedener Regalebenen ihrer jeweiligen Art entsprechend jeweils in nur eine Richtung orientiert sind, insbesondere das alle Signalgeber verschiedener Ebenen nur in eine erste Richtung orientiert sind und dass alle Signalempfänger verschiedener Ebenen nur in eine zweite Richtung orientiert sind.

In Weiterbildung wird vorgeschlagen, dass alle Signalgeber entsprechend der Schwerkraft von oben nach unten orientiert und alle Signalempfänger entgegengesetzt von unten nach oben orientiert sind.

Ferner wird vorgeschlagen, dass der Regalboden jeweils einer Regalebene gegenüber der horizontalen Raumebene in zumindest einer Richtung ein Gefälle aufweist.

Insbesondere wird vorgeschlagen, dass die Lagervorrichtung ein Schrank mit zumindest einer Schublade ist, wobei zumindest jeweils zwei gegenüberliegende Seitenwände der Schublade als Begrenzungselemente einen Überwachungsraum zumindest teilweise umschließen.

In nochmaliger Weiterbildung wird vorgeschlagen, dass zumindest eine Sensorbaugruppe in zumindest ein, eine Seitenwand bildendes, Begrenzungselement integriert ist.

Es ist möglich und wird daher vorgeschlagen, dass Sensorelemente verschiedener Begrenzungselemente entsprechend ihrer jeweiligen Position auf der Sensorbaugruppe jeweils annähernd auf einer gemeinsamen Achse ausgerichtet sind, wobei die Achse quer zur Schwerkraft F annähernd horizontal verläuft.

Weiter wird vorgeschlagen, dass Sensorelemente verschiedener Begrenzungselemente ihrer jeweiligen Art entsprechend jeweils in nur eine Richtung orientiert sind, insbesondere das alle Signalgeber verschiedener Begrenzungselemente nur in eine erste Richtung orientiert sind und dass alle Signalempfänger verschiedener Begrenzungselemente nur ein eine zweite Richtung orientiert sind.

Bevorzugt wird vorgeschlagen, dass alle Signalgeber entsprechend der Auszugrichtung der Schublade von ihrer Rückwand zu ihrer Stirnwand orientiert sind und alle Signalempfänger entgegengesetzt von ihrer Stirnwand zu ihrer Rückseite orientiert sind. Weiter wird vorgeschlagen, dass zumindest ein weiteres, quer zur Ausziehrichtung der Schublade angeordnetes Begrenzungselement vorhanden ist.

Ferner wird vorgeschlagen, dass zumindest ein parallel zur Ausziehrichtung der Schublade angeordnetes Trennelement vorhanden ist.

In Weiterbildung wird vorgeschlagen, dass die Schublade einen Schubladenstecker aufweist, der die Schublade zumindest im geschlossenen Zustand elektrisch mit einer Energieversorgung und / oder einer Datenleitung im Korpus des Schranks verbindet.

Ferner wird vorgeschlagen, dass eine Steuereinheit zumindest einen Belegzustand zumindest eines Überwachungsraums oder eines Teils eines unterteilten Überwachungsraums oder einem Teilbereich anfragt und das Ergebnis auswertet und / oder an ein übergeordnetes Verwaltungssystem weitermeldet.

Weiter wird vorgeschlagen, dass die Steuereinheit zumindest jeweils zwei zusammenwirkende Sensorelemente zumindest zweier verschiedener Sensorbaugruppen der zumindest Teilmengen zusammen wirkender Sensormatrizen logisch verwaltet, und so zumindest einen logischen Teilbereich definiert, der sich in einer Ebene entlang einer Verlaufsrichtung einer ersten Sensorbaugruppe und / oder quer zur Verlaufsrichtung einer ersten Sensorbaugruppe über zumindest eine weitere, parallel angeordnete Sensorbaugruppe erstreckt.

In Weiterbildung wird vorgeschlagen, dass zumindest ein Teilbereich genau einer Einheit eines einzulagernden Lagerguts entspricht.

In nochmaliger Weiterbildung wird vorgeschlagen, dass zumindest ein logischer Teilbereich zumindest einer Anordnung aus Begrenzungselementen und / oder Trennelementen entspricht, insbesondere der Größe zumindest eines aus Begrenzungselementen und / oder Trennelementen gebildeten Teilbereichs entspricht.

In nochmaliger Weiterbildung wird vorgeschlagen, dass die Steuereinheit in einer Initialisierung die Teilbereiche aufgrund der Anordnung der Begrenzungselemente und / oder Trennelemente untereinander erfasst und entsprechend den Überwachungsraum in seine logischen Teilbereiche definiert und im Verwaltungssystem abspeichert.

### Bezugszeichenliste

- 100: Sensorbaugruppe
- 10: Trägerelement
- 11: Außenfläche
- 12: Außenfläche
- 13: Außenfläche
- 14: Außenfläche
- 15: Leiterbahn
- 16: Steuerelektronik
- 20: Sensorelement
- 21: Signalgeber
- 22: Signalempfänger
- 23: elektrische / elektronische Bauteile
- 24: Datenbus
- 25: Stromversorgung
- 26: Prüfsignalgeber
- 30: Klebefläche
- 31: Deckfolie
- 32: Schutzschicht / -folie
- 40: Markierung / Fixierung
- 200: Sensorsystem
- 260: Steuerelektronik
- 270: Kommunikationseinrichtung
- 300: Lagervorrichtung
- 310: Begrenzungselement
- 311 a, b, c, d ,e, f: Außenflächen d. Begrenzungselement
- 315: Signalöffnung zur Durchleitung von Signalen
- 316: Schutzschicht
- 317: Einschuböffnung
- 318: Ausnehmung
- 321: Abschnitt des Begrenzungselements
- 322: Abschnitt des Begrenzungselements
- 325: Fixiervorrichtung f. Trennelement
- 326: Kontakt Fixiervorrichtung
- 327: Strom- u. Datenleitung
- 330: Trennelement
- 331: Kontakt
- 360: Steuereinheit
- 400: Regal
- 410: Regalboden
- 500: Schrank
- 501: Schublade
- 510 a, b, c, d: Seitenwände
- 523: Schubladenstecker
- 524: Datenbus
- 525: Stromversorgung
- 660: Verwaltungssystem

- A: Achse
- B: Bezugspunkt
- BZ: Belegzustand
- E: Ebene
- F: Schwerkraft
- G: Lagergut
- OR: Orientierungsrichtung
- R: Überwachungsraum
- S: Signal
- TB: Teilbereich

## Patentansprüche

1. Vorrichtung zur Lagerung von Stückgut (G), insbesondere Regal oder Schrank, mit mindestens einem Boden (410) mit einer Oberseite, auf der das Stückgut (G) in einem Überwachungsraum (R) lagerbar ist, und mit einer Unterseite und mit Öffnungen (315), die von der Oberseite zu der Unterseite verlaufen, sowie Signalgebern (21) mit zugeordneten Signalempfängern (22), wobei mindestens eine Sorte (21, 22) in den Öffnungen an der Unterseite angeordnet ist und ein Signal (S) der Signalgeber (21) durch die Signalempfänger (22) detektierbar ist, sowie einer Steuerelektronik (16) mit Steuersystem (260), die die Signalgeber (21) und Signalempfänger (22) mit Strom versorgen sowie Signale (S) der Signalempfänger (22) verarbeiten sowie sie identifizieren, um einen Belegzustand (BZ1, BZ2) des Überwachungsraums (R) mit Stückgut an Hand des Vorliegens eines Signals (S) an dem jeweiligen Signalempfänger (22) zu identifizieren.

2. Vorrichtung nach Anspruch 1, **dadurch gekennzeichnet, dass** das Stückgut (G) Kartonagen, Aerosoldosen, Koffer, Lagerboxen und Werkzeugkisten umfasst.

3. Vorrichtung nach Anspruch 1 oder 2, **dadurch gekennzeichnet, dass** die Böden (410) schräg verlaufen, d.h. unter einem Winkel zu einer Horizontalen verlaufen.

4. Vorrichtung nach einem der vorangehenden Ansprüche, **dadurch gekennzeichnet,**
**dass** auf der Oberseite des mindestens einen Boden (410) eine für Signale (S) transparente Schutzschicht (316) angeordnet ist, bspw. eine Folie, um die Öffnungen (315) zu schützen.

5. Vorrichtung nach einem der Ansprüche 1 bis 4, **dadurch gekennzeichnet, dass** Signalgeber (21) und Signalempfänger (22) gemeinsam in einer Öffnung (315) an der Unterseite des mindestens einen Bodens (410) angeordnet sind.

6. Vorrichtung nach einem der Ansprüche 1 bis 4, **dadurch gekennzeichnet, dass** entweder die Signalgeber (21) oder die Signalempfänger (22) in Öffnungen (315) an der Unterseite des mindestens einen Bodens (410) angeordnet sind und die andere Sorte (21, 22) oberhalb der Öffnungen (315) angeordnet ist, wobei bevorzugt jedem Signalgeber (21) genau ein Signalempfänger (22) zugeordnet ist, bspw. diese auf derselben Achse (A) angeordnet sind.

7. Vorrichtung nach einem der vorangehenden Ansprüche, **dadurch gekennzeichnet,**
**dass** Signalgeber (21) und/oder die Signalempfänger (22) von Öffnungen (315) eines Abschnitts des mindestens einen Bodens (410) zu einer Sensorbaugruppe (100) zusammengefasst sind, um diesen Abschnitt mit dieser einen Sensorbaugruppe (100) zu überwachen.

8. Vorrichtung nach Anspruch 7, **dadurch gekennzeichnet, dass** eine Reihe von linear hintereinander angeordneten Öffnungen (315) den Abschnitt bildet.

9. Vorrichtung nach Anspruch 3 und 8, **dadurch gekennzeichnet, dass** die Reihe von Öffnungen von einem tiefsten Punkt des Bodens (410) zu einem höchsten Punkt des Bodens (410) insbesondere linear und auf kürzestem Weg verläuft und die Signalgeber (21) und/oder Signalempfänger (22) der Öffnungen zu einer Sensorbaugruppe (100) zusammengefasst sind, insbesondere um der Sensorgruppe (100) im Steuersystem (260) ein bestimmtes Stückgut (G) zuzuordnen, bspw. eine bestimmte Kartonage oder Aerosoldose.

10. Vorrichtung nach Anspruch 9, **dadurch gekennzeichnet, dass** in dem Steuersystem (260) eine Standfläche des jeweiligen Stückguts (G) auf dem Boden (410) hinterlegt ist, so dass das Steuersystem (260) anhand der Signale (S) der Signalempfänger (22) der Sensorbaugruppe (100) und der Standfläche des einzelnen Stückguts die Anzahl von gleichen Stücken des Stückguts auf dem Boden entlang der Sensorbaugruppe (100) berechnen kann.

11. Verfahren zum Betreiben einer Vorrichtung nach einem der vorangehenden Ansprüche umfassend:
a. Bereitstellen des mindestens einen Bodens (410),
b. Unterteilen des Bodens (410) in Abschnitte,
c. Anordnen von Stücken gleichen Stückguts in demselben Abschnitt,
d. Erstellen einer Zuordnung in der Steuerelektronik 16 bzw. in dem Steuersystem (260), welches Stückgut in welchem Abschnitt des Bodens (410) angeordnet ist, und
e. Auswerten von Signalen von Signalempfängern (22) des Abschnitts, um die Anzahl von Stücken des Stückguts (G) in dem Abschnitt zu bestimmen.

12. Verfahren nach Anspruch 11, **gekennzeichnet durch** Hinterlegen einer Standfläche des jeweiligen Stückguts (G) auf dem Boden (410) in dem Steuersystem (260), so dass das Steuersystem (260) anhand der Signale (S) der Signalempfänger (22) der Sensorbaugruppe (100) und der Standfläche des einzelnen Stückguts die Anzahl von gleichen Stücken des Stückguts auf dem Boden entlang der Sensorbaugruppe (100) berechnen kann.

13. Verfahren nach Anspruch 11 oder 12, **gekennzeichnet durch** Ausgeben eines Bestellsignals durch das Steuersystem (260) an eine Person und/oder ein Bestellsystem, wenn die Anzahl von gleichen Stücken eines Stückguts in einem Abschnitt einen vorbestimmten Schwellwert aufweist.

14. Verfahren nach Anspruch 13, **dadurch gekennzeichnet, dass** das Ausgeben des Bestellsignals das Versenden einer Mail, einer SMS oder einer MMS umfasst.

15. Verfahren nach Anspruch 13 oder 14, **dadurch gekennzeichnet, dass**
das Ausgeben ein Übermitteln von Informationen zur Kennzeichnung des Stückguts, bspw. eine Artikelnummer, Informationen zu der benötigten Anzahl von Stücken des Stückguts sowie eine Information zur Identifikation des Bodens (410) bzw. zur Vorrichtung zur Lagerung von Stückgut zur Adressierung einer Nachlieferung des Stückguts enthält; und/oder
das Verfahren ein schräges Anordnen des mindestens einen Bodens (410) aufweist, so dass Stücke gleichen Stückguts (G) in dem jeweiligen Abschnitt durch die Gravitation an das untere Ende des Bodens (410) rutschen; und/oder
das Verfahren ein Anordnen von Trennelementen (330) zwischen benachbarten Abschnitten eines Bodens (410) aufweist.

## Claims

1. Device for storing piece goods (G), in particular rack or cupboard, with at least one bottom (410) with an upper side, on which the piece goods (G) are storable in a surveillance space (R), and with a lower side and with openings (315), which run from the upper side to the lower side, as well as signal transmitters (21) with associated signal receivers (22), wherein at least one type (21, 22) is arranged in the openings at the lower side and a signal (S) of the signal transmitters (21) is detectable by the signal receivers (22), as well as a control electronic (16) with a control system (260), which energize the signal transmitters (21) and the signal receivers (22) as well as processes signals (S) of the signal receivers (22) and identify them in order to identify an occupancy state (BZ1, BZ2) of the surveillance space (R) with piece goods on the basis of the existence of a signal (S) at the respective signal receiver (22).

2. Device according to claim 1, **characterized in that**
the piece goods (G) include cardboard packages, aerosol cans, cases, storage boxes and tool boxes.

3. Device according to claim 1 or 2, **characterized in that**
the bottoms (410) run inclined, i.e. run at an angle to a horizontal direction.

4. Device according to one of the preceding claims, **characterized in that**
a protection layer (316), e.g. a foil, which is transparent for signals (S), is arranged on the upper side of the at least one bottom (410) in order to protect the openings (315).

5. Device according to claim 1 to 4, **characterized in that**
signal transmitters (21) and signal receivers (22) are arranged together in an opening (315) at the lower side of the at least one bottom (410).

6. Device according to one of the claims 1 to 4, **characterized in that**
either the signal transmitters (21) or the signal receivers (22) are arranged in openings (315) at the lower side of the at least one bottom (410) and the other type (21, 22) is arranged above the openings (315), wherein preferably precisely one signal receiver (22) is associated to each signal transmitter (21), e.g. they are arranged on a same axis (A).

7. Device according to one of the preceding claims, **characterized in that**
the signal transmitters (21) and/or the signal receivers (22) of openings (315) of a section of the at least one bottom (410) are combined to a sensor assembly (100) in order to monitor this section with this one sensor assembly (100).

8. Device according to claim 7, **characterized in that**
a row of openings (315), which are arranged linearly one behind the other, forms the section.

9. Device according to claims 3 and 8, **characterized in that**
the row of openings runs from a deepest point of the bottom (410) to a highest point of the bottom (410), in particular linearly and on a shortest path, and the signal transmitters (21) and/or the signal receivers (22) of the openings are combined to a sensor assembly (100), in particular in order to assign to the sensor assembly (100) in the control system (260) a particular piece good (G), e.g. a particular cardboard package or aerosol can.

10. Device according to claim 9, **characterized in that**
a footprint of the respective piece goods (G) on the bottom (410) is stored in the control system (260), such that the control system (260) can calculate the number of same pieces of the piece goods on the bottom along the sensor assembly (100) on the basis of the signals (S) of the signal receivers (22) of the sensor assembly (100) and the footprint of the individual piece goods.

11. Method for operating a device according to one of the preceding claims, including:
a. providing the at least one bottom (410);
b. subdividing the bottom (140) into sections;
c. arranging pieces of a same piece good in a same section;
d. establishing a correlation in the control electronics (16) respectively in the control system (260) which piece goods are arranged in which section of the bottom (410); and
e. evaluating signals of signal receivers (22) of the section in order to determine the number of pieces of the piece goods (G) in the section.

12. Method according to claim 11, **characterized by** storing in the control system (260) a footprint of the respective piece goods (G) on the bottom (410), such that the control system (260) can calculate the number of same pieces of the piece goods on the bottom along the sensor assembly (100) on the basis of the signals (S) of the signal receivers (22) of the sensor assembly (100) and the footprint of the individual piece goods.

13. Method according to claim 11 or 12, **characterized by** outputting an ordering signal by the control system (260) to a person and/or an ordering system, if the number of the same pieces of a piece goods in a section comprises a pre-defined threshold value.

14. Method according to claim 13, **characterized in that**
the outputting of the ordering signal includes the sending of a mail, an SMS or an MMS.

15. Method according to claim 13 or 14, **characterized in that**
the outputting comprises a transmitting of information for an identification of the piece goods, e.g. an item number, information for the required number of pieces of the piece goods as well as an information for an identification of the bottom (410) respectively for device for storing piece goods for addressing an additional delivery of the piece goods; and/or
the method comprises an arranging of the at least one bottom (410) in an inclined manner, such that pieces of the same piece goods (G) in the respective section slide to the lower end of the bottom (410) by the gravitation, and/or
the method comprises an arranging of separating elements (330) between neighbouring sections of a bottom (410).

## Revendications

1. Dispositif de stockage d'une marchandise de détail (G), en particulier rayonnage ou armoire, avec au moins un fond (410) avec une face supérieure, sur laquelle la marchandise de détail (G) peut être stockée dans un espace de surveillance (R), et avec une face inférieure et avec des ouvertures (315), qui s'étendent de la face supérieure à la face inférieure, et des émetteurs de signaux (21) avec des récepteurs de signaux (22) associés, **caractérisé en ce qu'**au moins un type (21, 22) est disposé dans les ouvertures au niveau de la face inférieure et un signal (S) des émetteurs de signaux (21) peut être détecté par les récepteurs de signaux (22), et une électronique de commande (16) avec système de commande (260), qui alimentent les émetteurs de signaux (21) et les récepteurs de signaux (22) en courant et traitent des signaux (S) des récepteurs de signaux (22) et les identifient, afin d'identifier un état d'occupation (BZ1, BZ2) de l'espace de surveillance (R) par de la marchandise de détail à l'aide de la présence d'un signal (S) au niveau du récepteur de signaux (22) concerné.

2. Dispositif selon la revendication 1, **caractérisé en ce que** la marchandise de détail (G) comprend des cartonnages, des bombes aérosol, des malles, des boîtes de stockage et des caisses à outils.

3. Dispositif selon la revendication 1 ou 2, **caractérisé en ce que** les fonds (410) s'étendent à l'oblique, c'est-à-dire selon un angle par rapport à une horizontale.

4. Dispositif selon l'une quelconque des revendications précédentes, **caractérisé en ce**
**qu'**une couche de protection (316) transparente pour des signaux (S), par exemple une feuille, est disposée sur la face supérieure d'au moins un fond (410), afin de protéger les ouvertures (315).

5. Dispositif selon l'une quelconque des revendications 1 à 4, **caractérisé en ce que** des émetteurs de signaux (21) et des récepteurs de signaux (22) sont disposés conjointement dans une ouverture (315) au niveau de la face inférieure d'au moins un fond (410).

6. Dispositif selon l'une quelconque des revendications 1 à 4, **caractérisé en ce que** soit les émetteurs de signaux (21) soit les récepteurs de signaux (22) sont disposés dans des ouvertures (315) au niveau de la face inférieure d'au moins un fond (410) et l'autre type (21, 22) est disposé au-dessus des ouvertures (315), un seul récepteur de signaux (22) étant associé de préférence à chaque émetteur de signaux (21), par exemple ceux-ci étant disposés sur le même axe (A).

7. Dispositif selon l'une quelconque des revendications précédentes, **caractérisé en ce**
**que** des émetteurs de signaux (21) et/ou les récepteurs de signaux (22) d'ouvertures (315) d'une section d'au moins un fond (410) sont regroupés en un ensemble de capteurs (100), afin de surveiller cette section avec cet ensemble de capteurs (100).

8. Dispositif selon la revendication 7, **caractérisé en ce qu'**une rangée d'ouvertures (315) disposées linéairement les unes derrière les autres forme la section.

9. Dispositif selon les revendications 3 et 8, **caractérisé en ce que** la rangée d'ouvertures s'étend d'un point le plus bas du fond (410) à un point le plus haut du fond (410), en particulier linéairement et par le chemin le plus court, et les émetteurs de signaux (21) et/ou récepteurs de signaux (22) des ouvertures sont regroupés en un ensemble de capteurs (100), en particulier afin d'associer une marchandise de détail (G) définie, par exemple un cartonnage ou une bombe d'aérosol définis, à l'ensemble de capteurs (100) dans le système de commande (260).

10. Dispositif selon la revendication 9, **caractérisé en ce qu'**une surface de pose de la marchandise de détail (G) concernée sur le fond (410) est mise en mémoire dans le système de commande (260), de sorte que le système de commande (260), à l'aide des signaux (S) des récepteurs de signaux (22) de l'ensemble de capteurs (100) et de la surface de pose de la marchandise de détail individuelle, puisse calculer le nombre de pièces identiques de la marchandise de détail sur le fond le long de l'ensemble de capteurs (100).

11. Procédé pour faire fonctionner un dispositif selon l'une quelconque des revendications précédentes comprenant :
a. la fourniture d'au moins un fond (410),
b. la division du fond (410) en sections,
c. la disposition de pièces de marchandise de détail identique dans la même section,
d. l'élaboration d'une association dans l'électronique de commande (16) ou dans le système de commande (260) de quelle marchandise de détail est disposée dans quelle section du fond (410), et
e. l'évaluation de signaux de récepteurs de signaux (22) de la section, afin de déterminer le nombre de pièces de la marchandise de détail (G) dans la section.

12. Procédé selon la revendication 11, **caractérisé par** la mise en mémoire d'une surface de pose de la marchandise de détail (G) concernée sur le fond (410) dans le système de commande (260), de sorte que le système de commande (260), à l'aide des signaux (S) des récepteurs de signaux (22) de l'ensemble de capteurs (100) et de la surface de pose de la marchandise de détail individuelle, puisse calculer le nombre de pièces identiques de la marchandise de détail sur le fond le long de l'ensemble de capteurs (100).

13. Procédé selon la revendication 11 ou 12, **caractérisé par** l'émission d'un signal de passation de commande par le système de commande (260) à une personne et/ou un système de passation de commande, lorsque le nombre de pièces identiques d'une marchandise de détail dans une section présente une valeur seuil prédéfinie.

14. Procédé selon la revendication 13, **caractérisé en ce que** l'émission du signal de passation de commande comprend l'envoi d'un courriel, d'un SMS ou d'un MMS.

15. Procédé selon la revendication 13 ou 14, **caractérisé en ce que**
l'émission contient une transmission d'informations concernant le marquage de la marchandise de détail, par exemple un numéro d'article, d'informations concernant le nombre nécessaire de pièces de la marchandise de détail et d'une information concernant l'identification du fond (410) ou concernant le dispositif de stockage de marchandise de détail pour l'adressage d'une livraison ultérieure de la marchandise de détail ; et/ou
le procédé comprend une disposition à l'oblique d'au moins un fond (410), de sorte que des pièces de marchandise de détail (G) identique glissent dans la section concernée par la gravitation à l'extrémité inférieure du fond (410) ; et/ou
le procédé comprend une disposition d'éléments de séparation (330) entre des sections adjacentes d'un fond (410) .
